Europäisches Patentamt

European Patent Office

Office européen des brevets

(19)

(11) Veröffentlichungsnummer : **0 059 860**
**B2**

(12) ## NEUE EUROPÄISCHE PATENTSCHRIFT

(45) Veröffentlichungstag der neuen Patentschrift :
21.12.88

(21) Anmeldenummer : 82101193.9

(22) Anmeldetag : 17.02.82

(51) Int. Cl.⁴ : **C 04 B 35/80, C 04 B 35/82, B 32 B 9/04**

(54) **Wärmedämmender Pressstoff auf der Basis von aus der Flammenhydrolyse gewonnenem mikroporösem Oxidaerogel, sowie Verfahren zu seiner Herstellung, eine daraus hergestellte Folie und ein damit hergestelltes kaschiertes Wärmedämmelement.**

(30) Priorität : 09.03.81 DE 3108816

(43) Veröffentlichungstag der Anmeldung :
15.09.82 Patentblatt 82/37

(45) Bekanntmachung des Hinweises auf die Patenterteilung : 23.05.84 Patentblatt 84/21

(45) Bekanntmachung des Hinweises auf die Entscheidung über den Einspruch : 21.12.88 Patentblatt 88/51

(84) Benannte Vertragsstaaten :
AT BE CH DE FR GB IT LI NL SE

(56) Entgegenhaltungen :
DE--A-- 2 036 124
FR--A-- 1 539 907
Die Akte enthält technische Angaben, die nach dem Eingang der Anmeldung eingereicht wurden und die nicht in dieser Patentschrift enthalten sind.

(73) Patentinhaber : Grünzweig + Hartmann und Glasfaser AG
Bürgermeister-Grünzweig-Strasse 1-47
D-6700 Ludwigshafen am Rhein (DE)

(72) Erfinder : Kummermehr, Hans
Prinzregentenstrasse 25a
D-6700 Ludwigshafen (DE)
Erfinder : Sommer, Rolf
Mutterstadter Strasse 5
D-6701 Dannstadt-Schauernheim 1 (DE)

(74) Vertreter : Kuhnen, Wacker & Partner
Schneggstrasse 3-5 Postfach 1553
D-8050 Freising (DE)

EP 0 059 860 B2

## Beschreibung

Die Erfindung betrifft einen wärmedämmenden Preßstoff auf der Basis von aus der Fammenhydrolyse gewonnenem mikroporösem Oxidaerogel, mit biegeelastischen oder biegeschlaffen anorganischen Fasern und gegebenenfalls weiteren Zuschlagstoffen wie insbesondere Trübungsmittel, sowie ein Verfahren zu seiner Herstellung, eine daraus hergestellte Folie und ein damit hergestelltes kaschiertes Wärmedämmelement.

Wärmedämmende Preßstoffe auf der Basis von aus der Flammenhydrolyse gewonnenem, mikroporösem Oxidaerogel, insbesondere Kieselsäureaerogel, sind vielfach bekannt und beispielsweise unter der Bezeichnung MINILEIT (eingetr. Warenzeichen) der Anmelderin im Handel, sowie vielfach beschrieben.

Wie in diesem Zusammenhang etwa die DE-PS 19 54 992 ausführlich erläutert, besteht das wesentliche Problem, daß aus solchen feindispersen Stoffen hergestellte Preßkörper zwar ausgezeichnete Wärmedämmeigenschaften besitzen, mechanisch aber kaum belastbar sind. Wird ein solcher Stoff zu einer Platte gepreßt, wie dies beispielsweise zur Bildung der Lagerplatte für eine elektrische Heizwendel einer strahlungsbeheizten Kochplatte aus der DE-OS 30 04 187 bekannt ist, so bröselt bereits bei geringen mechanischen Beaufschlagungen das mikroporöse Material an der Oberfläche ab, und ist die Platte so spröde, daß sie bei der geringsten Biegebelastung fast ohne vorherige Verformung bricht. Die mechanischen Eigenschaften derartiger Platten ähneln also denjenigen von beispielsweise gebundenem feinem Sand od. dgl. Deshalb eignen sich solche Platten nur für Anwendungsfälle, bei denen das Material praktisch keinen mechanischen Belastungen ausgesetzt ist, also etwa nur in der Aufnahmeschale für die Heizwendel einer Kochplatte liegt und diese lagert.

Nach der Lehre der genannten DE-PS 19 54 992 soll ein solcher Preßstoff dadurch eine bessere mechanische Belastbarkeit erhalten, daß er von einer flexiblen Umhüllung umgeben ist, die mit Druck am Preßstoff anliegt. Gemäß der weiteren Lehre etwa der DE-PS 20 36 124 soll das Pressen des mikroporösen Stoffes in der Umhüllung so geführt werden, daß eine möglichst innige Verzahnung der feindispersen Stoffe untereinander und mit der Oberfläche bzw. den Poren der relativ rauhen Umhüllung beispielsweise aus Glasseidengewebe erfolgt. Ebenso wie im Falle der DE-PS 19 54 992 soll damit dieser Sandwich-Platte erhöhte Steifigkeit vermittelt, jedoch eine luftdichte Versiegelung und Evakuierung sowie eine Verwendung von harzartigen Bindemitteln, welche die Wärmedämmfähigkeit vermindern, vermieden werden. Die damit erhöhte Steifigkeit der umhüllten Platte erhöht zwar die Biegebelastbarkeit der Platte in gewissem, wenn auch relativ geringem Umfang, jedoch bricht das Material innerhalb der Umhüllung praktisch ohne vorherige Verformung, sobald eine die Biegefestigkeit übersteigende Belastung auftritt.

Aus der DE-OS 29 28 695 ist daher eine grundsätzlich im Aufbau der Platte der DE-PS 20 36 124 entsprechende Wärmedämmplatte bekannt, bei der durch ein Trennmittel zwischen der Oberfläche des feinporigen Dämm-Materials und der Umhüllung gerade vermieden werden soll, daß der Preßvorgang hier zu einer mechanischen Verkrallung führt. Dadurch werden Relativbewegungen zwischen der Oberfläche des mikroporösen Preßstoffes und der Umhüllung möglich und ergibt sich, an sich überraschend, eine erheblich verbesserte Biegbarkeit des Verbundkörpers, jedoch nur so lange, als der mikroporöse Preßstoff, vom Preßvorgang herrührend, durch die Zugspannungen in der Umhüllung in einem allseitigen Druckzustand gehalten wird. Somit lassen sich mit derartigen Umnüllungen zwar die mechanischen Eigenschaften von Wärmedämmplatten od. dgl. auf der Basis solcher mikroporöser Preßstoffe in gewissem Umfange verbessern, jedoch reicht diese Verbesserung nur für eine relativ geringe Anzahl von Anwendungsfällen für einen solchen hochwirksamen wärmedämmenden Preßstoff aus und scheiden durch die notwendige Umhüllung aus Glasseidengewebe od. dgl., ganz abgesehen von dem erforderlichen Aufwand hierfür, sehr viele weitere Anwendungsfälle. aus, bei denen eine solche Umhüllung stört oder überhaupt nicht verwendbar ist.

Hinsichtlich der stofflichen Zusammensetzung eines derartigen Preßstoffes im einzelnen sowie seiner physikalischen Eigenschaften bietet der Stand der Technik eine große Vielzahl von Vorschlägen. Nach der DE-AS 16 71 186 beispielsweise soll der Preßstoff aus 70 Gew.-% eines Kieselerde-Aerogels, 20 Gew.-% Kanal-Ruß als Trübungsmittel und 10 Gew.-% Aluminiumsilikatfasern bestehen und zu einer Dichte oder einem Raumgewicht von 240 kg/m³ verdichtet werden, so daß sich bei einer Temperatur von 200 °C eine Wärmeleitfähigkeit des Preßstoffes von 0,022 W/mK ergibt. Nach der Lehre der DE-AS 16 71 186 beispielsweise soll der Preßstoff aus 70 Gew.-% eines Kieselerde-Aerogels, 20 Gew.-% Kanal-Ruß als Trübungsmittel und 10 Gew.-% Aluminiumsilikatfasern bestehen und zu einer Dichte oder einem Raumgewicht von 240 kg/m³ verdichtet werden, so daß sich bei einer Temperatur von 200 °C eine Wärmeleitfähigkeit des Preßstoffes von 0,022 W/mK ergibt. Nach der Lehre der DE-AS 16 71 186 kann das Raumgewicht bei Bedarf auch bis zu 400 kg/m³ erhöht werden, jedoch wird darauf hingewiesen, daß ein zu hohes Verpressen unter Zusammendrücken der Mikrostruktur des Materials vermieden werden sollte, da jegliches weitere Zusammendrücken einer solchen Struktur die Wärmeleitfähigkeit des Materials erhöhen muß, und zwar insofern, als es die mikroporöse Struktur zu zerstören sucht und auch den Faserstoff-Leitfaktor durch Vergrößerung der Gesamt-Berührungsfläche zwischen den anteiligen Teilchen und der Isolation erhöhen muß. Die Aluminiumsilikatfasern, die ganz oder teilweise auch durch Kohlenstoffasern ersetzt werden können, vergrößern zwar die Leitfähigkeit des Stoffes, bilden jedoch ein Fasernetz, welches die Aerogel- und Trübungsmittel-Teilchen lose bindet.

Gemäß der DE-OS 28 06 367 soll das Material Aluminiumoxidfasern in einer Menge bis zu 12 Gew.-% enthalten. Bei der dort an einer Stelle angegebenen Obergrenze des Faseranteiles von 20 % handelt es sich um einen offensichtlichen Schreibfehler, zumal auch ausdrücklich erläutert ist, daß etwa 12 und vorzugsweise 10 Gew.-% Aluminiumoxidfasern eine praktische obere Grenze sind, während ein bevorzugter Anteil zuzugebender Aluminiumoxidfasern im Bereich zwischen 1 und 7 Gew.-% des gesamten Materials liegt. Die Obergrenze des Anteils an Aluminiumoxidfasern von 10 bis 12 % ergibt sich nicht nur durch die mit höherem Faseranteil ansteigende Wärmeleitfähigkeit, sondern auch durch Probleme mechanischer Festigkeit des Materials, welches aber ohnehin wiederum zur Lagerung der elektrischen Heizwendel einer Kochplatte und für ähnliche Anwendungsfälle benutzt werden soll, bei denen kaum mechanische Belastungen auftreten. Das Raumgewicht des Preßstoffes kann nach der Lehre der DE-OS 28 06 367 zwischen 160 und 480 kg/m³ liegen, wobei es sich bei der diesbezüglichen Angabe von 0,16 bis 0,48 kg/m³ wiederum um einen offensichtlichen Schreibfehler in der Benennung handelt.

Aus der EP-OS 13 387 ist weiterhin ein solcher Preßstoff bekannt, der 30 bis 95 Gew.-% Aerogel und 5 bis 70 Gew.-% Trübungsmittel gegebenenfalls unter Zusatz von bis zu 5 Gew.-% organisches oder anorganisches Bindemittel enthalten kann, wobei das Trübungsmittel im unmittelbaren Anschluß an die Flammenhydrolyse dem agglomerierenden Aerogel zur Coagglomeration zugemischt wird, um den Aufwand einer mechanischen Mischung dieser Stoffe zu vermeiden und bessere mechanische Eigenschaften zu erzielen. Das Trübungsmittel kann dabei im Bedarfsfalle anisotrope geometrische Formen aufweisen, wie z. B. Faser- oder Blättchenstruktur. Diese Mischung wird mit einem Druck von beispielsweise 15 bar verdichtet, was zu einem Raumgewicht in der Größenordnung von etwa 250 kg/m³ führen dürfte. An so hergestellten Proben wurde neben der Wärmeleitzahl die Kugeldruckhärte gemessen, während die selben Werte an stofflich gleichen Vergleichsbeispielen ermittelt wurden, bei denen eine mechanische Mischung des Aerogels mit dem Trübungsmittel vorgenommen wurde. Während keine Ermittlungen über Biegefestigkeiten der Proben angestellt wurden, zeigen die Beispiele und Vergleichsbeispiele, daß die Kugeldruckhärten im Falle der Coagglomeration nur höher liegen, wenn Ilmenit als Trübungsmittel verwendet wird, so daß auch in dieser Hinsicht eine Erhöhung der mechanischen Festigkeit allenfalls in Ausnahmefällen und sehr begrenzt erreichbar ist. Durch Coagglomeration anstelle mechanischer Vermischung alleine ist eine Erhöhung der Biegefestigkeit oder Biegbarkeit des Preßstoffes auch nicht zu erwarten.

Aus der US-PS 30 55 831 schließlich ist eine große Vielzahl von Beispielen für stoffliche Mischungen und mechanische Behandlungen derartiger Preßstoffe bekannt, wobei die Raumgewichte zwischen etwa 95 und 800 kg/m³ schwanken und zwischen 2 und 75 % an verstärkenden Fasern zugegeben sind. Dabei wurde jedoch stets ein organisches (oder auch anorganisches) Bindemittel wie Phenol-Formaldehydharz zugegeben, in einer Menge, welche eine gewünschte Festigkeit ergibt ; hierdurch läßt sich zwar im Ergebnis jede gewünschte Festigkeit bei entsprechend hohem Bindemittelgehalt und guter Bindewirkung insbesondere organischer Bindemittel erzielen, jedoch natürlich auf Kosten der Wärmedämmeigenschaften und häufig unter energieintensiver Aushärtung. Bei sehr hohen Fasergehalten von 38 und 67 % ergab sich eine verformbare Matte mit geringem Raumgewicht unter 200 kg/m³, die zwar leicht biegbar ist, jedoch praktisch keine Biegefestigkeit und Reißfestigkeit aufweist, wie dies von Fasermatten her an sich bekannt ist. Bei einem Fasergehalt von 15 % und einem Kunstharzbindemittel in einem Anteil von 10 % jeweils bezogen auf das Gewicht, ergab sich bei Verwendung von 75 % Kanalruß, jedoch ohne jegliches Aerogel, ein handhabbarer Körper mit einer Raumdichte von etwa 250 kg/m³ über dessen Festigkeitseigenschaften jedoch keine näheren Angaben vorliegen. Bei einem Fasergehalt von 12 % und einem Preßstoff auf der Basis von Kieselsäureaerogel ergab sich bei einem Kunstharz-Bindemittelgehalt von 5 % eine Raumdichte von etwa 320 kg/m³ bei einer Biegefestigkeit von etwa 52 N/cm² im Falle von 67 % Kieselsäureaerogel und 16 % Silizium als weitere Anteile bzw. von etwa 32 N/cm² im Falle von 55 % Kieselsäureaerogel und 28 % Titandioxid als weitere Bestandteile. Eine Biegefestigkeit von 31 N/cm² wurde auch mit 5 % Fasern bei 81 % Kieselsäureaerogel und 9 % Ruß sowie 5 % Phenolharz-Bindemittel erreicht, sogar bei einem geringeren Raumgewicht von etwa 256 kg/m³.

Die in der US-PS 30 55 831 angegebenen Beispiele weisen sämtlich organische Bindemittel in Form von Phenolformaldehydharz oder, so weit die oben wiedergegebenen Beispiele betroffen sind, Phenolharz auf, welches bei der Härtungs-Wärmebehandlung praktisch rückstandsfrei in einem exothermen Vorgang ausgebrannt wird und zu einer sinterähnlichen Verbackung der feindispersen Teilchen des Preßstoffes führt. Es ist auch schon vorgeschlagen worden, Borkarbid als anorganisches Bindemittel zu verwenden, welches bei etwa 800 °C in einer exothermen Reaktion in Boroxid übergeht, welches die feindispersen Teilchen wie eine Zementmatrix miteinander verbackt. Das Ergebnis derart organisch oder anorganisch « gehärteter » Preßstoffe dieser Art ist in jedem Fall eine gegenüber demselben Preßstoff ohne Bindemittel durchaus sehr erhebliche Erhöhung der Biegefestigkeit und allgemein der mechanischen Festigkeit, jedoch ist der Preßstoff nach wie vor sehr spröde ; er gibt auch unter höheren, unterhalb der Biegefestigkeit liegenden Biegemomenten nicht merklich nach und bricht nach Überschreiten der Biegefestigkeit durch das aufgebrachte Biegemoment fast ohne vorherige Verformung plötzlich durch.

Neben dem sehr erheblichen herstellungstechnischen Aufwand durch die in der Regel erforderliche Wärmebehandlung über einen längeren Zeitraum hinweg besitzen übliche Bindemittelbeimengungen bei Preßstoffen der vorliegenden Gattung den Nachteil einer relativ inhomogenen, lokal unterschiedlichen Härtung. Die Partikel des Bindemittels werden in speziellen Mühlen, beispielsweise Schwing- oder Kugelmühlen auf geringe Korngröße gemahlen, die zumindest annähernd der Korngröße in der Rohstoffmischung des Preßstoffes entsprechen sollte und mit Hilfe einer Mischvorrichtung mechanisch in das Rohstoffgemisch eingearbeitet. Dieses Mischen ist jedoch mit erheblichen Schwierigkeiten behaftet, da sowohl die feinkörnigen Bindemittelteilchen als auch die Aerogel- und Trübungsmittelteilchen beim Mischen sofort Sekundär-Agglomerate bilden, so daß eine wirksame Vermischung von Bindemittel und Rohstoffen der Restmischung verhindert wird. Nach der Härtung werden daher nur bestimmte Partikelverbände durch das Bindemittel-Agglomerat zusammengehalten und neigt das Produkt bei Beanspruchung zu vorzeitigen Brüchen an bindemittelarmen Bereichen.

Dieser Nachteil wird zwar durch die Lehre der europäischen Patentanmeldung 27264 der Anmelderin vermieden, wonach das Bindemittel, welches in einem Vorgemisch gleichförmig mit einem Dispergiermittel verteilt ist, feindispers vorliegt, so daß die Aerogel- und Trübungsmittelteilchen mit ihren Kanten und Ecken im Verbund homogen kreuzvernetzt werden. Auch hier entsteht jedoch ein Körper von zwar hoher Biegefestigkeit, jedoch äußerst geringer Biegbarkeit bzw. Durchbiegung bei Biegebelastung.

Der Faseranteil und das Raumgewicht spielen bei derartigen mit Bindemittel gehärteten Preßstoffen keine wesentliche Rolle, da die gewünschte Verbesserung der mechanischen Festigkeit, insbesondere der Biegefestigkeit von den infolge des Bindemittelanteils miteinander verbackenen Aerogel- und Trübungsmittelteilchen herrührt, die einen festen, starren Verbund bilden, der primär durch das Zusammensintern der Teilchen gehalten ist und nicht durch die eingelagerten Fasern. Dies wird auch dadurch deutlich, daß bei den oben zitierten Beispielen der US-PS 30 55 831 trotz einer Verminderung des Faseranteils von 12 auf 5 % und trotz gleichzeitiger Verminderung des Raumgewichtes von etwa 320 auf 256 kg/m³ kein Abfall der Biegefestigkeit ermittelt wurde, und zwar offenbar deshalb, weil der durch den verminderten Faseranteil erhöhte Anteil feindisperser Trübungsmittel- und insbesondere Aerogelteilchen erhöhte Sinterungs- und Zusammenbackkräfte ergab, die einen etwaigen Festigkeitsverlust durch die Verminderung des Raumgewichtes ausglichen.

Nach der Lehre der US-PS 30 55 831 sollen verformbare Fasermatten einen Faseranteil von wenigstens 35 Gew.-% bis zu 75 Gew.-% an Fasern aufweisen, wobei bei einem Fasergehalt von 50 Gew.-% eine Wärmeleitzahl von etwa 0,036 W/mK angegeben ist. Für feste oder starre Körper hingegen soll der Fasergehalt bevorzugt bei etwa 5 Gew.-% liegen, kann jedoch bis auf 12 bis 15 Gew.-% steigen, ohne jedoch, wie vorstehend erlautert, im Falle eines auf 12 bis 15 Gew.-% erhöhten Faseranteils merkliche Festigkeitsverbesserungen der gehärteten Platte zu bringen.

Nach der Lehre der US-PS 30 55 831 sollen weiterhin Asbest-Stapelfasern mit einer Länge verwendet werden, die zu wenigstens 25 % über etwa 6 mm liegen soll. Derartige Fasern mit einer mittleren Länge zwischen beispielsweise 5 und 10 mm lassen sich jedenfalls bis zu einem Gewichtsanteil von 10 oder 12, im Extremfall auch 15 % noch problemlos mit dem Aerogel und Trübungsmittel vermischen, ohne Faseragglomerate zu bilden. Die Dicke der Fasern liegt nach der Lehre der US-PS 30 55 831 unterhalb von 20 μm, vorzugsweise von 10 μm. Da die Durchmesser der Aerogelteilchen in der Größenordnung von $10^{-10}$ m liegen, bilden selbst kurze, dünne Fasern noch makroskopische Körper in der Mikrostruktur der Aerogelteilchen. Selbst bei einer Faserdicke von wenigen μm ist diese noch um den Faktor 10 000 größer als der Durchmesser der Aerogelteilchen.

Zusammenfassend sind also aus dem Stand der Technik folgende Vorschläge bekannt, die mechanischen Eigenschaften gattungsgemäßer Preßstoffe zu verbessern :

1. Der Preßstoff wird in einer Umhüllung aus luftdurchlässigem Glasseidengewebe oder dergleichen verpreßt (DE-PS 19 54 992). Dabei wird entweder eine Verkrallung oder Verklammerung der Preßstoffoberfläche mit dem Hüllgewebe angestrebt (DE-PS 20 36 124), um die Wechselwirkung zu verbessern und erhöhte Steifigkeit und Biegefestigkeit zu erhalten, oder aber wird zwischen die Oberfläche des Preßstoffes und die Umhüllung ein Trennmittel eingefügt (DE-OS 29 28 695), um Relativbewegungen zu ermöglichen und den Verbundkörper in gewissem Umfang biegbar zu machen. Derartige Umhüllungen sind jedoch aufwendig und behindern die Verwendbarkeit eines solchen Wärmedämm-Materials.

2. Durch Coagglomeration von Trübungsmittel mit Aerogel im unmittelbaren Anschluß an die Flammenhydrolyse sollen mechanische Eigenschaften verbessert werden (EP-OS 13 387). Selbst soweit diese mechanischen Eigenschaften sich auf die Oberflächenhärte beziehen, ist eine Verbesserung nur bei bestimmten Trübungsmitteln erzielbar. Eine Erhöhung der Biegefestigkeit oder der Biegbarkeit des Preßstoffes hierdurch ist nicht angegeben und auch nicht zu erwarten.

3. Durch Zugabe von Bindemittel läßt sich ein Härtungseffekt erzielen (US-PS 30 55 831 oder Deutsche Patentanmeldung P 29 42 087.9). Bei einem Faseranteil von bevorzugt etwa 5 bis 10 % ergibt sich eine starre Platte erheblicher Biegefestigkeit, die jedoch sehr spröde ist und praktisch überhaupt nicht gebogen werden kann. Der Anteil der Fasern, deren Länge zu 25 % oder mehr oberhalb von etwa 6 mm liegen kann, kann auf 12 bis maximal 15 % gesteigert werden, jedoch ist dies ohne meßbaren Einfluß auf die Biegefestigkeit. Eine bessere Biegbarkeit ergibt sich hierdurch ebenfalls nicht, da das Bindemittel den Preßstoff unverändert aussteift.

Durch einen stark erhöhten Faseranteil von 35 bis 75 Gew.-%, bevorzugt 50 Gew.-% ergibt sich jedenfalls bei Verwendung von rund 5 Gew.-% Phenolformaldehydharz als Bindemittel ein faseriger, filzartiger Körper eines geringen Raumgewichtes von unter 200 kg/m³ mit einer Wärmeleitzahl, die noch knapp unterhalb derjenigen ruhender Luft liegt. Derartige Fasermatten sind biegbar, weisen jedoch sehr geringe Festigkeiten, insbesondere sehr geringe Biegefestigkeit, auf (Beispiele IV und V der US-PS 30 55 831).

Der Erfindung liegt die Aufgabe zugrunde, einen Preßstoff zu schaffen, der bei möglichst hoher Biegefestigkeit dennoch gut biegbar ist, also zwar einerseits eine ausreichende Formstabilität zur Bildung gegebenenfalls auch dünner Platten besitzt, andererseits aber etwa zur Anpassung an Krümmungen ohne abzureißen relativ stark verformt werden kann.

Die Lösung dieser Aufgabe gelingt überraschenderweise durch die Kombination der kennzeichnenden Merkmale des Anspruchs 1.

Der allgemeine Bereich des Gewichtsanteils der Fasern zwischen etwa 12 und 30 % des Preßstoffes liegt weit überwiegend oberhalb der maximalen Faserzumischung nach dem Stand der Technik zur Bildung von formstabilen Platten mit 12 bis 15 Gew.-% an Fasern und unterhalb des Faseranteils von 35 Gew.-% zur Bildung biegbarer Fasermatten gemäß der Lehre der US-PS 30 55 831. Soweit es sich um Aluminium-Silicat-Fasern handelt, deren Fasermaterial eine spezifische Dichte von etwa 2,55 g/cm$^3$ besitzt, gelten die erfindungsgemäßen Gewichtsanteile unmittelbar. Bei spezifisch schwereren oder leichteren Fasern ist eine Anpassung um den Faktor vorzunehmen, der dem Verhältnis der abweichenden Dichte in g/cm$^3$ von 2,55 entspricht. Von spezifisch doppelt so schwerem Fasermaterial muß also die doppelte Gewichtsmenge zugegeben werden, so daß das entscheidende, von den Fasern eingenommene Volumen gleich bleibt. Jedoch kann nicht auf den Volumenanteil der Fasern im Preßstoff Bezug genommen werden, da das Volumen des Preßstoffs je nach gewähltem Raumgewicht stark schwankt, der Faseranteil aber nach vorliegenden Untersuchungen erstaunlicherweise eben gerade nicht im Abhängigkeit von diesen Raumgewichtsschwankungen geändert werden muß. Vielmehr wirkt eine gegebene optimale Fasermenge in einem Preßstoff mit Raumgewicht 200 kg/m$^3$ ebenso optimal in einem Preßstoff mit Raumgewicht 400 kg/m$^3$ obwohl dort der relative Volumenanteil der fast inkompressiblen Fasern annähernd doppelt so hoch ist. Andererseits kommt es aber auch nicht auf den bloßen Gewichtsanteil an, unabhängig von der spezifischen Dichte, sondern auf das im Einzelfall zugemischte Volumen, dieses jedoch wiederum unabhängig von dem Volumen bzw. dem Raumgewicht des Preßstoffs im übrigen.

Nach den der Erfindung zugrundeliegenden Erkenntnissen kommt es jedoch nicht darauf an, daß die Gewichtsanteile sämtlicher Fasern eines beigemengten Fasergemisches — bei einer spezifischen Dichte des Fasermaterials von 2,55 g/cm$^3$ — im allgemeinen Bereich zwischen 12 %, und 30 Gew.-% des Preßstoffes liegen, da sich gezeigt hat, daß Fasern mit einer Länge von unter etwa 10 mm praktisch ohne Einfluß auf die mechanischen Eigenschaften sind, insbesondere was die Biegbarkeit anbelangt. Daher ist erfindungsgemäß vorgeschrieben, daß der allgemeine Bereich eines Gewichtsanteils der Fasern zwischen 12 und 30 % des Preßstoffes weiterhin nur für solche Fasern gelten soll, die eine größere Länge als etwa 10 mm besitzen. Dabei sollen allerdings Fasergemische verwendet werden, deren Faserlänge ein Maximum über 10 mm aufweist, so daß der Anteil an gegenüber der Grenze von 10 mm kürzeren Fasern sowie notwendigen Verunreinigungen in jedem Falle relativ gering ist, im Idealfall völlig verschwindet. Dies deshalb, weil Fasern mit einer geringeren Länge als etwa 10 mm zwar kaum zur Beeinflussung der mechanischen Eigenschaften beitragen und insbesondere keine Verbesserung der Biegbarkeit ergeben, jedoch die Wärmeleitzahl erhöhen, was in jedem Falle nachteilig ist. In der Praxis zeigt sich jedoch, daß jedenfalls im Falle einer Verwendung von Mineralfasern, beispielsweise Aluminiumsilikatfasern, ein Anteil kürzerer Fasern und Verunreinigungen von etwa 10 %, bezogen auf das Fasergemisch, mit vertretbarem Aufwand nicht mehr vermeidbar ist, so daß selbst bei Verwendung spezieller Langstapelfasern der Gesamtfaseranteil in der Praxis minimal bei etwa 13 bis 14 und maximal bei etwa 33 bis 34 Gew.-% liegt, um zu einem Faseranteil mit einer größeren Länge als 10 mm zwischen etwa 12 und 30 Gew.-% des Preßstoffes zu gelangen. Ohne Verwendung spezieller Fasern, wie Langstapelfasern oder dergleichen, ergibt sich zur Erzielung eines Minimalanteiles von 12 Gew.-% langer Fasern eine Gesamtzumischung von zwischen 14 und 17 Gew.-% an Fasern, so daß die praktische Obergrenze des Faseranteiles von 12 bis 15 Gew.-% nach dem Stand der Technik etwa die Untergrenze des entsprechenden erfindungsgemäßen Bereiches darstellt.

Wie weiter unter noch näher erläutert ist, besteht zumindest einer der Wirkungsmechanismen des erfindungsgemäß hohen Faseranteiles großer Länge darin, daß die einzelnen Fasern in genügender Anzahl durch die Aerogelteilchen gehalten werden. Da Zuschlagstoffe mit Ausnahme von Bindemittel zur Härtung keine vergleichbare Haltewirkung auf die Fasern ausüben können, soll daher der Aerogel-Anteil am Preßstoff 40 Gew.-% nicht unterschreiten, so daß die Summe der Gewichtsanteile von Fasern und Zuschlagstoffen insgesamt zwischen etwa 12 und 60 Gew.-% schwanken kann, der Aerogel-Anteil entsprechend also zwischen etwa 40 und 90 Gew.-% schwankt. Dies bedeutet, daß in höheren Bereichen des Faseranteiles gegebenenfalls der Trübungsmittelanteil zurückgenommen werden muß, um die Summe von maximal 60 Gew.-% hierfür nicht zu überschreiten. Ein Bindemittel zur Härtung entsprechend der Lehre der US-PS 30 55 831 darf jedoch keinesfalls im Preßstoff enthalten sein, da dieses im erfindungsgemäßen Bereich des Faseranteils zu einem Verbacken und Versprödung des Preßstoffes führt und daher die erfindungsgemäß primär angestrebte Biegbarkeit wieder zunichte machen würde.

Das Raumgewicht des Preßstoffes ist nur insoweit kritisch, als es in jedem Falle über 200 kg/m$^3$ liegen soll, um eine ausreichende mechanische Festigkeit zu ergeben, wobei ein bevorzugter Bereich über 250 kg/m$^3$ liegt. Speziell bevorzugt sind höhere Raumgewichte zwischen 300 und 400 kg/m$^3$ wobei über 300 kg/m$^3$ die Wärmedämmfähigkeit des Preßstoffes abzunehmen beginnt. Ein besonders bevorzugtes Raumgewicht liegt im Bereich von 350 kg/m³, weil hier durch erhöhtes Raumgewicht nur ein sehr geringer Abfall der Wärmedämmfähigkeit festzustellen ist, andererseits aber sehr gute Festigkeiten erzielt werden.

Unterhalb eines Gewichtsanteils an auch über 10 mm langen Fasern von 12 % des Preßstoffes ergeben auch sehr lange Fasern keine merkliche Verbesserung der Biegefestigkeit und der Biegbarkeit, weswegen hier die Untergrenze des allgemeinen Bereiches für den Faseranteil liegt. Die größte Erhöhung der Biegefestigkeit und überraschend zugleich der Biegbarkeit liegt bei einem Langfaseranteil zwischen etwa 14 und 20 Gew.-% des Preßstoffes, während sich die Obergrenze des allgemeinen Bereiches für den Faseranteil von etwa 30 Gew.-% des Preßstoffes dadurch ergibt, daß hier sowohl die Biegefestigkeit als überraschend auch die Biegbarkeit, jedenfalls sofern erfindungsgemäß kein härtendes Bindemittel zugesetzt ist, wieder auf unbrauchbare Werte abfallen.

Bevorzugt wird mit Fasergemischen gearbeitet, deren Faserlänge ein Maximum deutlich höher als 10 mm aufweist, beispielsweise bei 30 bis 50 mm liegt. Hierdurch wird der Anteil an Fasern mit einer gegenüber 10 mm geringeren Länge auch ohne besondere Zusatzmaßnahmen geringgehalten. Andererseits ergibt sich eine Obergrenze für dieses Maximum der Verteilung bei 70 mm, da ein zu hoher Anteil längerer Fasern sich etwa ebenson nachteilig auswirkt wie ein zu hoher Anteil an Kurzfasern und Verunreinigungen ; denn eine Faser mit beispielsweise 100 mm Länge erweist sich für die Beeinflussung der mechanischen Eingeschaften kaum wirksamer als eine solche mit beispielsweise 30 bis 50 mm Länge, jedoch sinkt durch einen hohen Anteil besonders langer Fasern bei gleichem Gewichtsanteil die Zahl der Fasern ab, was für die Festigkeitswerte und auch für die Biegbarkeit nachteilig in Erscheinung tritt. Aus derselben Erkenntnis folgt auch, daß der Faserdurchmesser im Durchschnitt jedenfalls unter 10 µm, bevorzugt unter 5 µm und insbesondere etwa zwischen 1 und 3 µm liegen sollte, damit bei gegebenen Gewichtsanteil eine vorbestimmte Anzahl von Fasern nicht unterschritten wird.

Wie weiter unten noch näher erläutert wird, läßt sich anhand der Erfindung ein Preßstoff herstellen, dessen Biegefestigkeit etwa in die Größenordnung der Biegefestigkeit gehärteter Preßstoffe gemäß der US-PS 30 55 831 reicht, der aber dabei in Abhängigkeit von der Dicke eines daraus gebildeten Körpers selbst um kleine Radien gut biegbar ist und dabei so große Zähigkeit besitzt, daß auch mehrmaliges Hin- und Herbiegen nicht zu einem Abreißen führen muß. Es ist dies ein ähnlicher qualitativer Unterschied wie zwischen etwa Gußeisen und Federstahl. Dabei lassen sich aus einem erfindungsgemäßen Preßstoff selbst dünne Folien mit Dicken von nur etwa 1 mm und noch weniger herstellen, die etwa die mechanischen Eigenschaften von Asbestpapier besitzen. Insbesondere solche Folien, aber auch dickere Platten lassen sich mit einem Trägermaterial, wie Metallfolie, Blech oder dergleichen, kaschieren oder beidseitig abdecken und besitzen, befestigt an solchem Trägermaterial, noch weiter verbesserte Eigenschaften in bezug auf ihre Biegbarkeit, so daß selbst die Ränder derartiger Verbundplatten fast scharfkantig um 180° umgebogen, etwa umgebördelt, werden können, ohne die mechanische Integrität der aus dem erfindungsgemäßen Preßstoff gebildeten hochwirksamen Dämmschicht zu zerstören.

Weitere Einzelheiten, Merkmale und Vorteile der Erfindung ergeben sich aus der nachfolgenden Beschreibung von Beispielen anhand der Zeichnung, insbesondere in Verbindung mit den zusätzlichen Ansprüchen.

Es zeigt

Figur 1 ein Diagramm über die Abhängigkeit der mittleren Wärmeleitzahl λ vom Raumgewicht des Preßstoffes bei verschiedenen Faseranteilen,

Figur 2 ein Diagramm der Abhängigkeit der Biegefestigkeit vom Langfaseranteil bei verschiedenen Raumgewichten,

Figur 3 ein Diagramm der Abhängigkeit der Biegewechselzahl vom Langfaseranteil,

Figur 4 eine Ansicht einer aus dem Preßstoff hergestellten dünnen Folie mit einer Prägung,

Figur 5 eine Ansicht eines aus dem Preßstoff hergestellten Wärmedämmelementes in Sandwich-Bauweise,

Figur 6 eine Teilansicht einer anderen Ausführungsform eines Wärmedämmelementes in Verbundbauweise,

Figur 7 eine abgewandelte Ausführungsform eines Wärmedämmelementes gemäß Figur 6, und

Figur 8 den Preßstoff als beidseitig kaschiertes Wärmedämmelement mit umgebördeltem Rand.

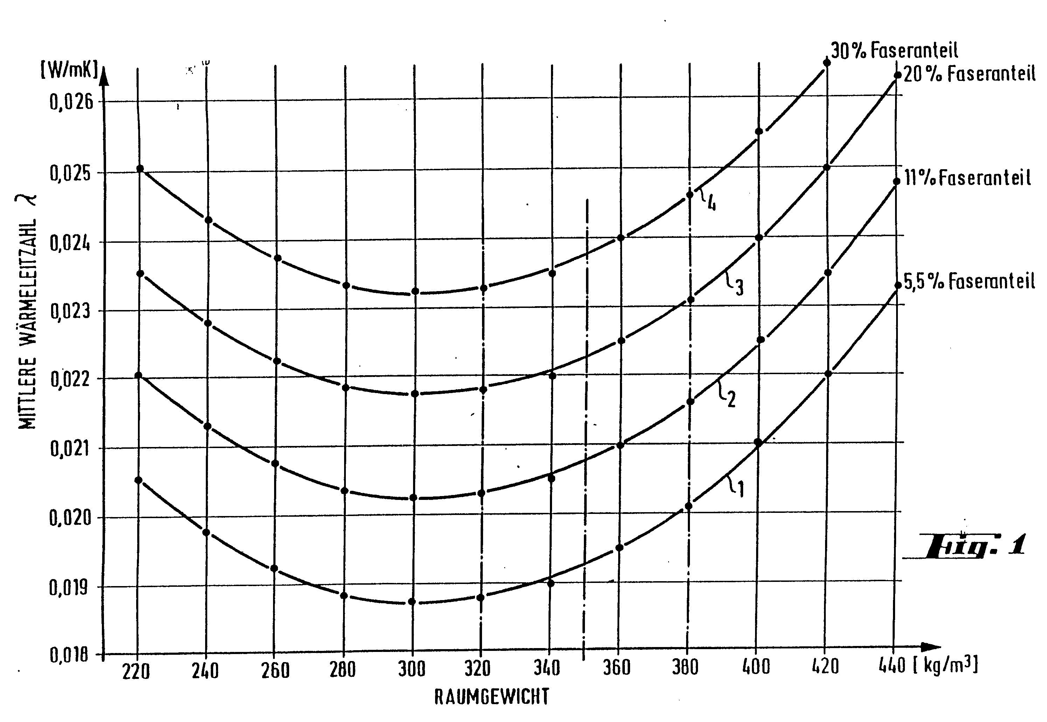

In Fig. 1 ist das Verhalten der mittleren Wärmeleitzahl λ bei sich änderndem Raumgewicht eines erfindungsgemäßen Preßstoffes untersucht, wobei als Parameter verschiedene Faseranteile untersucht wurden. Die Messung erfolgte bei einer Mitteltemperatur von 200°C. Für die Messungen wurden Prüfkörper aus vier unterschiedlichen Rezepturen jeweils in den Raumgewichten zwischen 220 und 440 kg/m³ in Schritten von 20 kg/m³ hergestellt. Als Fasern gelangten Aluminiumsilikat-Langstapelfasern zum Einsatz, mit einem Häufigkeitsmaximum der Faserlänge bei etwa 40 mm, wobei etwa 10 % des gesamten Faseranteils als Verunreinigungen oder als Kurzfasern mit einer Länge unter 10 mm vorlagen. Fasern mit einer Länge von mehr als 10 mm werden nachfolgend abgekürzt als Langfasern bezeichnet.

Als Oxidaerogel wurde Kieselsäureaerogel gewählt. Als Trübungsmittel diente Siliziumkarbid. Die Rezeptur der mit 1, 2, 3 und 4 bezeichneten Kurven gemäß Fig. 1 ergibt sich aus der nachfolgenden Tabelle 1.

(Siehe Tabelle 1 Seite 7 f.)

Tabelle 1

| Faseranteil insgesamt [Gew.-%] | Anteil Langfasern [Gew.-%] | Anteil SiO$_2$-Aerogel [Gew.-%] | Anteil SiC-Trübungsmittel [Gew.-%] |
|---|---|---|---|
| 5.5 | 5 | 60.2 | 34.3 |
| 11 | 10 | 60.0 | 29.0 |
| 20 | 18 | 60.0 | 20.0 |
| 30 | 27 | 55.0 | 15.0 |

Wie Fig. 1 in diesem Zusammenhang veranschaulicht, ergibt sich mit höherem Faseranteil generell eine höhere Wärmeleitzahl. Selbst bei einem Faseranteil von insgesamt 30 Gew-% und einem Raumgewicht von 300 kg/m³ liegt jedoch die Wärmeleitzahl nur knapp über 0,023 W/mK, was verglichen mit der entsprechenden Wärmeleitzahl ruhender Luft bei 200 °C von etwa 0,039 W/mK ein immer noch außerordentlich geringer Wert ist, der eine entsprechend hohe Wärmedämmfähigkeit ergibt. Oberhalb und unterhalb eines Raumgewichtes von 300 kg/m³ steigt die Wärmeleitzahl geringfügig an, liegt aber auch bei 400 kg/m³ und höchstem Faseranteil von 30 Gew.-% mit etwa 0,0255 W/mK immer noch ganz erheblich günstiger als die Wärmeleitzahl ruhender Luft. Der Anstieg der Wärmeleitzahl oberhalb von etwa 300 kg/m³, der zunächst sehr langsam einsetzt, rührt im wesentlichen daher, daß ein stärkeres Verpressen des Materials zu einem innigeren gegenseitigen Kontakt der Aerogelteilchen und sonstigen Bestandteile des Preßstoffes führt, wodurch die Wärmeleitfähigkeit erhöht wird. Der Anstieg unterhalb von 300 kg/m³ rührt daher, daß der Preßstoff zu wenig dicht ist, um die Wärmeleitung innerhalb der im Preßstoff enthaltenen Luft ausreichend zu unterbinden. Die grundsätzliche Erhöhung der Wärmeleitzahl mit erhöhtem Faseranteil ergibt sich aus dem Umstand, daß die Fasern, zumal bei entsprechend großer Faserlänge, gegenüber dem Aerogel-Basisstoff erhöhte Wärmeleitfähigkeit besitzen wobei besonders lange Fasern relativ gesehen besonders gute Wärmeleiter sind.

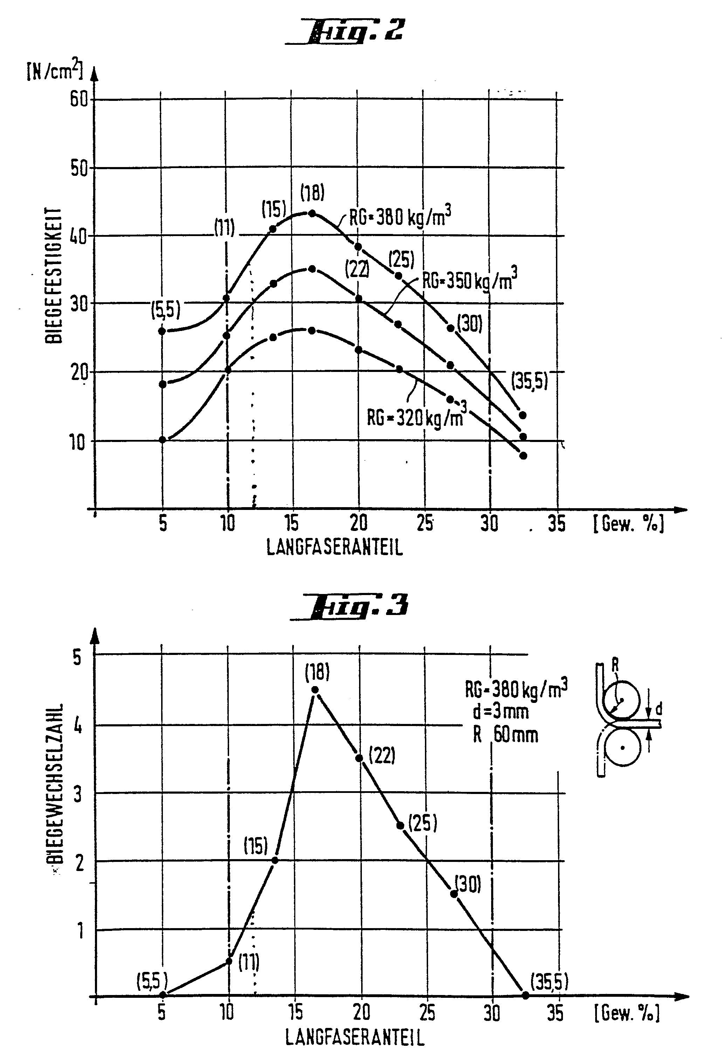

Andererseits veranschaulicht Fig. 2, daß die Biegefestigkeit sowie überhaupt die mechanische Belastbarkeit des Preßstoffes grundsätzlich mit erhöhtem Raumgewicht zunimmt. Dabei ist im Bereich oberhalb von 300 kg/m³ eine relativ starke Zunahme festzustellen, die für einen gegebenen Preßstoff etwa linear von der Erhöhung des Raumgewichtes abhängt. Während bei Raumgewichten oberhalb von etwa 400 kg/m³ grundsätzlich eine weitere Festigkeitserhöhung erzielbar wäre, steigt hier, zumal bei ebenfalls hohem Faseranteil, die Wärmeleitzahl doch sehr deutlich an, so daß dieser Bereich gemieden werden sollte, wenn die jeweiligen Festigkeitsanforderungen dies zulassen. Im Bereich zwischen 300 und 350 kg/m³ andererseits steigt die Wärmeleitfähigkeit, wie Fig. 1 veranschaulicht, nur allmählich an, so daß hier eine wesentliche Zunahme der Festigkeit ohne wesentliche Zunahme der Wärmeleitzahl beobachtet werden kann. Daher stellt ein Raumgewicht im Bereich von etwa 350 kg/m³ für viele Fälle einen optimalen Kompromiß dar, bei dem, eine nur sehr bescheidene Erhöhung der Wärmeleitzahl in Kauf genommen wird, gegenüber einem Raumgewicht von 300 kg/m³ jedoch bereits eine sehr deutliche Festigkeitsverbesserung erzielt werden kann.

Zur Ermittlung der Abhängigkeit der Biegefestigkeit vom Langfaseranteil gemäß Fig. 2 wurden Prüfkörper mit einer Länge von 160 mm, einer Breite von 40 mm und einer Dikke von 20 mm in den Raumgewichten 320 kg/m³, 350 kg/m³ und 380 kg/m³ mit gemäß Tabelle 2 wechselnden Faseranteilen hergestellt und ohne seitliche Einspannung einem Biegeversuch durch stoßfreie Belastung in der Mitte zwischen den Auflagern unterzogen.

Tabelle 2

| Faseranteil insgesamt [Gew.-%] | Anteil Langfasern [Gew.-%] | Anteil SiO$_2$-Aerogel [Gew.-%] | Anteil SiC-Trübungsmittel [Gew.-%] |
|---|---|---|---|
| 5.5 | 5 | 60,2 | 34.3 |
| 11 | 10 | 60,0 | 29.0 |
| 15 | 13.5 | 60,0 | 25.0 |
| 18 | 16,5 | 62,0 | 20.0 |
| 22 | 20 | 58,0 | 20.0 |
| 25 | 23 | 55,0 | 20.0 |
| 30 | 27 | 55.0 | 15.0 |

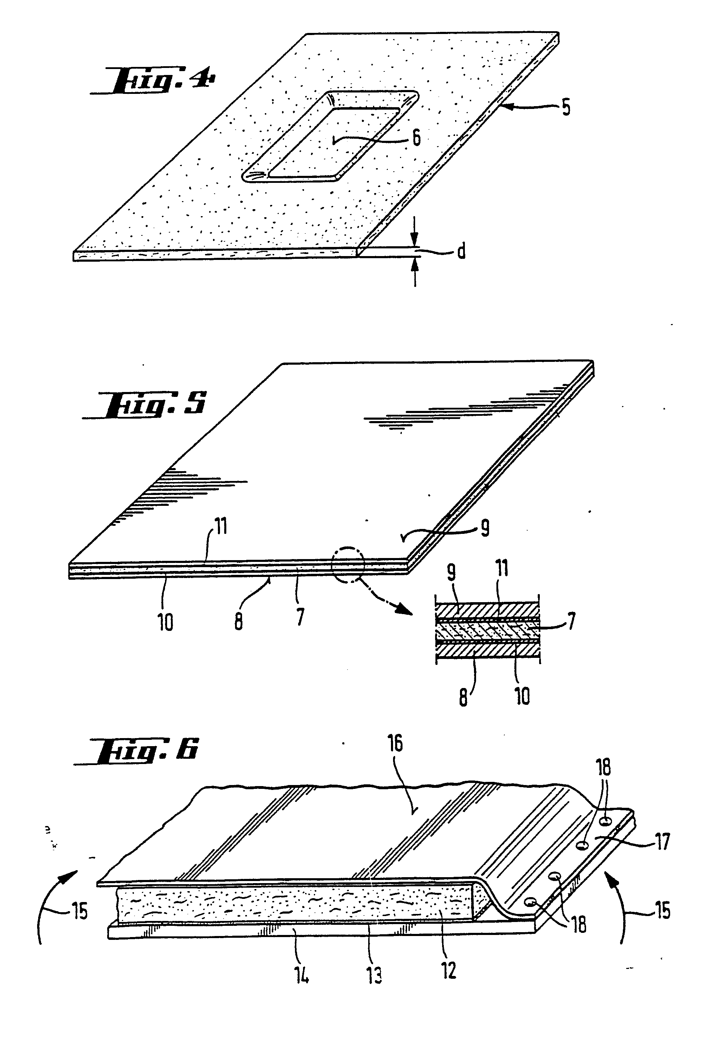

Als Fasern wurden wiederum Aluminiumsilikat-Langstapelfasern verwendet. In Fig. 2 ist ebenso wie in der nachfolgend erläuterten Fig. 3 jedoch nicht der gesamte Faseranteil aufgetragen, sondern nur der Langfaseranteil, also derjenige Anteil der Fasern, der länger war als 10 mm, was bei dem verwendeten Fasergemisch für etwa 90 % der Fasern zutraf. An den Meßpunkten in den Fig. 2 und 3 ist daher in Klammern angegeben, welchem Gesamt-Faseranteil im Beispielsfalle der jeweils aufgetragene Langfase-

7

ranteil entsprach. Im Falle handelsüblicher und für derartige Zwecke gebräuchlicher Fasergemische, insbesondere in Form von Mineralfasern, liegt entsprechend stichprobenweisen Untersuchungen der Anteil von Kurzfasern unter 10 mm und Verunreinigungen erheblich höher, den stichprobenweisen Untersuchungen zufolge etwa zwischen 30 und 90 %, streuend, soweit es sich nicht ohnehin um Faserkurzschnitte handelt, die hier außer Betracht blieben. In der Praxis wird das Fasergemisch üblicherweise als Charge in den Mischer für die Rohstoffe eingeführt und so mit den Rohstoffen innig vermischt. Dabei lassen sich auch Fasern in einem Anteil von etwa bis zu 8 Gew.-% problemlos untermischen, wenn nur etwa 40 % der Fasern kürzer sind als 10 mm, so daß hierdurch tatsächlich nur etwa 5 % an Langfasern zugemischt werden. Sollen mehr als etwa 8 Vol.-% an Fasern zugemischt werden, so bilden sich mit derartigen, vergleichsweise langen Fasern Agglomerate und Zusammenballungen, die eine homogene Durchmischung erschweren. Höhere Faseranteile von 10 oder gar 12 % lassen sich daher in der herkömmlichen Weise nur dann problemlos zumischen, wenn der Anteil der Langfasern geringer ist, so daß auch hier Langfasern nur in der Größenordnung von maximal etwa 5 Gew.-% zugemischt werden.

Zur Herstellung eines erfindungsgemäßen Preßstoffes mit einem Langfaseranteil von über 12 Gew.-% mußte daher ein besonderes Mischverfahren entwickelt werden. Hierbei wird zunächst ein Vorgemisch aus dem Oxidaerogel und den sonstigen Zuschlagstoffen erzeugt, dem dann als letzter Bestandteil die Fasern zumindest gruppenweise vereinzelt, beispielsweise in kleinen, lockeren Flocken oder dergleichen, allmählich zugemischt werden. Hierbei ist anzustreben, daß das Vorgemisch das Oxidaerogel und die sonstigen Zuschlagstoffe, wie insbesondere das Trübungsmittel, bereits in einer so homogenen Verteilung enthält, wie sie für den späteren Preßstoff vorgesehen ist, so daß bezüglich dieser sonstigen Rohstoffe bei der Faserzumischung keine zusätzliche Homogenisierung erfolgen muß. Der letzte Arbeitsgang der allmählichen Zumischung der Fasern in lockerer Flockenform oder dergleichen dient somit ausschließlich zu deren homogener Verteilung mit dem gewünschten Homogenisierungsgrad.

Wie Fig. 2 veranschaulicht, liegt die Biegefestigkeit bei einem Langfaseranteil von 5 %, wie es dem Stand der Technik entspricht, bei niedrigeren Raumgewichten in derselben Größenordnung wie bei einem sehr hohen Langfaseranteil von 32,5 %, der überhaupt nur unter großen Mühen und unter Verwendung des vorstehend geschilderten neuartigen Verfahrens einbringbar ist, während bei einem Raumgewicht oberhalb von 350 kg/m³ die Biegefestigkeit bei einem Langfaseranteil von 5 % deutlich über derjenigen bei einem Langfaseranteil von 32,5 % liegt. Beide Grenzwerte liegen jedoch außerhalb des erfindungsgemäßen Bereiches zwischen 12 und 30 Gew.-% an Langfasern, was bei dem erläuterten besonderen Langstapelfasergemisch der durchgeführten Versuche einem Gesamtfaseranteil zwischen etwa 13 % und 33 % entspricht. Fig. 2 zeigt jedoch sehr deutlich, daß im erfindungsgemäßen Bereich zwischen etwa 12 und 30 Gew.-% Langfasern die Biegefestigkeit ein ausgeprägtes Maximum zwischen etwa 14 und etwa 20 Gew.-%, speziell zwischen 15 und 18 Gew.-%, an Langfasern hat. Dieses Maximum ist in seiner Qualität unabhängig von dem jeweiligen Raumgewicht, liegt aber bei geringeren Raumgewichten niedriger, wobei die Kurve auch flacher verläuft. Bei Raumgewichten unterhalb von 200 kg/m³ hat sich ergeben, daß die Fig. 2 entsprechende Kurve so flach wird, daß quantitativ kein ausnutzbares Maximum mehr feststellbar ist, und erst oberhalb von 250 kg/m³ ein Maximum einer solchen Ausprägung erzielt wird, welches in der Regel den erhöhten Aufwand für das Mischverfahren zur Herstellung eines solchen Gemisches mit hohem Langfaseranteil rechtfertigt. Auch über 380 oder 400 kg/m³ hinaus setzt diese Tendenz sich fort und wird ein immer ausgeprägteres Maximum erzielt, jedoch auf Kosten einer geringen Wärmeleitzahl, wie sich aus Fig. 1 entnehmen läßt. Bei einem Gesamtfaseranteil von 20 Gew.-% was bei dem gewählten Langstapelfasergemisch etwa dem Maximum gemäß Fig. 2 entspricht, ergibt sich beispielsweise bei einem Raumgewicht von 440 kg/m³ gegenüber einem Raumgewicht von 320 kg/m³ eine Verschlechterung der Wärmeleitzahl von etwa 0,021 8 auf 0,026 3 W/mK, also von über 20 %, während sich bei dem höchsten Raumgewicht von 380 kg/m³ gemäß Fig. 2 lediglich eine Verschlechterung auf etwa 0,023 1 ergibt, also von nicht einmal 6 %.

Derartige Biegefestigkeiten, wie sie in Fig. 2 veranschaulicht sind, lassen sich nach der Lehre der USPS 30 55 831 durchaus auch durch Härtung erzielen und bei Bedarf übertreffen, sogar bei niedrigeren Raumgewichten. Nach Beispiel IX der US-PS 30 55 831 etwa ergibt sich bei einem Faseranteil von 5 Gew.% und einem Raumgewicht von 256 kg/m³ eine Biegefestigkeit von 31 N/cm², bei Beispiel X bei einem Faseranteil von 12 Gew.-% und einem Raumgewicht von 320 kg/m³ eine Biegefestigkeit von 52 N/cm², und gemäß Beispiel XI bei einem Faseranteil von 12 Gew.-% und einem Raumgewicht von 320 kg/m³ eine Biegefestigkeit von 32 N/cm², bei allen drei Beispielen jedoch mit einem Anteil von 5 Gew.-% Phenolharz als Härter. Der Abfall der Biegefestigkeit von Beispiel X auf Beispiel XI der US-PS 30 55 381 dürfte daher rühren, daß gemäß Beispiel X 67 Gew.-% an Kieselsäureaerogel, im Falle des Beispiels XI jedoch nur 55 Gew.-% Kieselsäureaerogel, Rest jeweils Trübungsmittel, enthalten sind, wobei der erhöhte Trübungsmittelanteil zu einer verringerten Wirksamkeit des härtenden Phenolharzes mit einer damit verbundenen verminderten Biegefestigkeit führt.

Alle diese gehärteten Preßstoffe weisen somit zwar durchaus erhebliche Biegefestigkeiten auf, sind aber starr und spröde. Durch die erfindungsgemäße Maßnahme, mit einem speziell hohen Anteil an Langfasern mit einer Länge von über 10 mm von über 12 Gew.-% — im Falle schwereren oder leichteren Fasermaterials als Al-Silicat-Fasern entsprechend mehr oder weniger — wird jedoch erreicht, daß nicht nur die Biegefestigkeit in der geschilderten und in Fig. 2 veranschaulichten Weise deutlich ansteigt, sondern darüber hinaus überraschend eine gute Biegbarkeit oder Bruchfestigkeit bei Biegung erzielt wird, wie Fig. 3 veranschaulicht.

Zur Ermittlung der Werte gemäß Fig. 3 wurde eine Platte mit 3 mm Dicke und einem Raumgewicht von 350 kg/m³ in ebener Ausbildung hergestellt, mit dem aus den Meßpunkten in Fig. 3 ersichtlichen wechselnden Langfaseranteil, der im übrigen dem Langfaseranteil bei den Meßpunkten in Fig. 2 entspricht. Diese Platte wurde um einen zylindrischen Prüfkörper mit einem Durchmesser von 120 mm, also mit einem Biegeradius von 60 mm, zu jeder Seite über einen Umfangsabschnitt des Prüfkörpers von 90° hin- und hergebogen, wie das Schema in Fig. 3 zeigt, wobei die Anzahl der Biegewechsel bis zum Bruch festgehalten wurde.

Wie sich hierzu Fig. 3 entnehmen läßt, zeigte auschließlich ein Preßstoff im erfindungsgemäßen Bereich überhaupt die Fähigkeit, einmal nach einer Seite hin an den Prüfkörper angelegt zu werden, ohne zu brechen. Im Falle eines Langfaseranteiles von 10 Gew.-% gelang auch nur eine Biegung in einer Richtung, während die Platte bereits beim Zurückbiegen brach. Jedoch zeigt sich ein Maximum von viereinhalb Biegewechseln in praktisch genau demselben bevorzugten Bereich des Langfaseranteiles, in dem auch das Biegefestigkeitsmaximum auftritt. Hier ist also der Preßstoff einerseits relativ biegefest, besitzt ein vergleichsweise hohes Widerstandsmoment gegen Biegung und ist formstabil, läßt sich aber andererseits dennoch völlig überraschend mehrfach in beide Richtungen über einen Umfangswinkel von 90° an den Prüfkörper anlegen, bevor ein Bruch auftritt. Völlig überraschend fällt aber im Anschluß an dieses Maximum auch die Biegewechselzahl wieder drastisch ab, so daß mit erhöhtem Faseranteil etwa von 30 % nicht ausschließlich die Biegefestigkeit abfällt, dafür aber die mögliche Biegewechselzahl zunimmt, sondern auch die Biegewechselzahl abfällt und außerhalb des erfindungsgemäßen Bereiches an der Obergrenze des Langfaseranteils genauso schlecht ist wie an der Untergrenze.

Der den geschilderten Phänomenen zugrundeliegende Wirkungsmechanismus konnte noch nicht abschließend geklärt werden. Doch ist anzunehmen, daß der vergleichsweise sprunghafte Anstieg der Biegefestigkeit bei einem Gehalt von etwa 12 Gew.-% an mehr als 10 mm langen Fasern darauf zurückzuführen ist, daß bei der dann gegebenen Dichte der Langfasern eine gewisse gegenseitige Verankerung der Fasern auftritt und zugleich die große Faserlänge jeder Einzelfaser über 10 mm eine gute Verankerung der Faser im Aerogel ergibt. Bei einer maximalen Dicke der Fasern von etwa 10 μm, bevorzugt unter 5 μm, und insbesondere im Bereich zwischen 1 und 3 μm, ergibt dieser Langfasergehalt eine entsprechend hohe Anzahl von Fasern, die durch den Preßvorgang eine bevorzugte Ausrichtung quer zur Preßrichtung besitzen und so die Aerogelteilchen innig verklammern. Dabei werden jeweils makroskopisch große Bereiche des Preßstoffes an einer Vielzahl einzelner, sich über diesen Bereich erstreckender Fasern gehalten, so daß auch bei einer Biegung um relativ kleine Durchmesser die an der Außenseite der Neutralebene liegenden und auf Zug beanspruchten Preßstoffbereiche durch die Fasern gehalten sind. Da die Fasern in der einleitend geschilderten Weise gegenüber den Aerogelteilchen in jedem Falle sehr groß sind, ergibt sich eine sehr gute Haftung der Aerogelteilchen am Faserumfang und damit eine entsprechende Haltewirkung auch bei — mikroskopisch betrachtet — mäßigen Verformungsgraden.

Bei einem Langfaseranteil zwischen etwa 14 und 20 % liegen insoweit offensichtlich die günstigsten Bedingungen vor und findet ein maximaler Anteil der Aerogelteilchen unmittelbar oder mittelbar Halt an in der Nähe befindlichen Faserbereichen. Die Fasern, die an sich biegeschlaff oder zumindest biegeelastisch sind, gehen bei jeder Biegung problemlos mit, während die Aerogelteilchen zwischen den Fasern an diesen einerseits so abgestützt sind, daß auch der dadurch gebildete Verbundstoff insgesamt relativ gut biegbar ist, während umgekehrt die Aerogelteilchen die Fasern so aussteifen und mit ihnen in Wechselwirkung treten, daß sich dabei zugleich eine hohe Biegefestigkeit ergibt.

Der Abfall der Biegefestigkeit und der Biegewechselzahl zwischen etwa 20 und 30 Gew.-% Langfaseranteil läßt darauf schließen, daß dann der Faseranteil für diese optimale Wechselwirkung zwischen Fasern und Aerogelteilchen zu hoch wird. Der Abfall der Biegefestigkeit dürfte daraus resultieren, daß dann ein relativ hoher Volumenanteil des Preßstoffes durch biegeschlaffe oder biegeelastische Fasern eingenommen wird, die vom verbleibenden Aerogel gegebenenfalls mit eingelagertem Trübungsmittel oder dergleichen nicht mehr so gut abgestützt und ausgesteift werden, wobei jenseits eines Langfaseranteils von etwa 30 Gew.-% bereits eine fasermattenartige Natur des Stoffes einsetzt und der Preßstoff insgesamt biegeschlaff wird. Erstaunlicherweise ist aber auch ein solcher biegeschlaffer, mattenartiger Stoff kaum zerstörungsfrei biegbar ; dies dürfte seinen Grund darin haben, daß die Aerogelteilchen an dem zu hohen Faseranteil keine ausreichenden Haftbedingungen mehr finden und beim Biegevorgang eventuell zwischen den zugbelasteten Fasern gequetscht werden und abbröseln, da ein Bindemittel für die Aerogelteilchen, wie etwa Phenolharz, ja nicht vorhanden ist.

Zur Bildung der Langfasern kommen praktisch alle Faserstoffe in Betracht, die als biegeelastische oder biegeschlaffe Fasern ausreichender Feinheit herstellbar sind. Da jedoch das grundsätzliche Anwendungsgebiet derartiger Preßstoffe die Erzielung einer hochwirksamen Wärmedämmung auch bei relativ hohen Temperaturen von 500 °C und mehr ist, scheiden in der Praxis Fasern aus, die für den jeweils vorgesehenen Einsatzfall keine ausreichende Temperaturbeständigkeit besitzen. Daher kommen in der Praxis in aller Regel nur anorganische Fasern in Frage. Diese können Mineralfasern sein, wie Aluminiumsilicatfasern, Aluminiumoxidfasern, Quarzfasern oder Mischungen hiervon. Es können jedoch auch metallische Fasern verwendet werden, etwa Edelstahlfasern. Der Faserdurchmesser sollte in jedem

Falle 3 μm nicht wesentlich überschreiten und zweckmäßig zumindest unter 5 μm, auch in ungünstigen Fällen jedenfalls unter 10 μm liegen. Für die Langfasern ergibt sich bei den bevorzugten geringen Faserdurchmessern von beispielsweise 1 bis 3 μm einerseits eine ausreichende Faserzahl bei den angegebenen Langfaseranteilen des Preßstoffes und andererseits ein Verhältnis Faserlänge zu Faserdurchmesser in der Größenordnung von mehreren Tausend, am besten über 10 000, was eine gegenseitige Verankerung der Fasern in einem Fasergerüst unterstützt.

Das Oxidaerogel ist bevorzugt Kieselsäure-Aerogel, jedoch kommt auch Aluminiumoxid-Aerogel, Zirkonoxid-Aerogel oder dergleichen in Frage, wobei Aluminiumoxid-Aerogel oder eine Zumischung dieses Aerogels zum Kieselsäure-Aerogel zur Erzielung höherer Temperaturbeständigkeit zweckmäßig sein kann.

Als Trübungsmittel, für das bei den untersuchten Proben Siliziumkarbid verwendet wurde, kommen auch alle anderen gängigen Trübungsmittel, wie Ilmenit, Titandioxid usw. in Frage, die aus dem Stand der Technik bekannt sind. Der Preßstoff kann neben dem Trübungsmittel weitere Zuschlagstoffe enthalten, jedoch kein den Preßstoff aushärtendes Bindemittel.

Das Oxidaerogel sollte in dem Preßstoff mit einem Mindestanteil von etwa 40 % vorliegen, da bei geringeren Aerogel-Anteilen keine ausreichende Wechselwirkung mehr zwischen dem Aerogel und den Langfasern zur Erzielung der oben geschilderten Wirkungsmechanismen auftritt. Die weiteren Zuschlagstoffe, wie Trübungsmittel, können, soweit bislang untersucht, die Funktion des Aerogels bei der Wechselwirkung mit den Langfasern nicht übernehmen, sondern wirken gewissermaßen als in bezug auf Biegefestigkeit und Biegbarkeit funktionslose Füllstoffe, bei höheren Gehalten an Zuschlagstoffen sogar fast als Trennmittel, da die Zuschlagstoffe Aerogelteilchen von den Fasern fernhalten. Aufgrund dieser Überlegungen kann sich eine Beschränkung für die zulässige Menge etwa an Trübungsmittel bei hohem Gesamtfaseranteil ergeben, da auch der Kurzfaseranteil und die Verunreinigungen des Fasergemisches ähnlich wie das Trübungsmittel als funktionslose Zusatzstoffe zu betrachten sind. Bei einem Langfaseranteil von 20 % im Preßstoff und von nur 50 % im Fasergemisch ergäbe sich somit ein Gesamtfaseranteil des Preßstoffes von 40 % und wäre mithin ein Trübungsmittelanteil sowie der Anteil insgesamt weiterer Zuschlagstoffe auf 20 % zu beschränken, um den Minimalanteil des Oxid-Aerogels von 40 % nicht zu unterschreiten. Grundsätzlich ist jedoch anzustreben, ein Fasergemisch mit möglichst hohem Langfaseranteil von beispielsweise 90 % bereitzustellen, so daß bei einem Langfaseranteil von beispielsweise 17 % noch eine Zumischung von bis zu etwa 40 % Zuschlagstoffen zulässig ist, wobei in der Regel aber nur ein geeignetes Trübungsmittel in einem Anteil von etwa 20 bis 30 % zugemischt wird, zugunsten eines höheren Aerogelanteils.

Wie Versuche mit unterschiedlichen Fasergemischen ergeben, dürfte eine optimale mittlere Faserlänge bei etwa 30 bis 50 mm liegen. Ideal wäre daher, ein Fasergemisch mit einheitlich Fasern einer Länge von beispielsweise 40 mm bereitzustellen. In der Praxis besitzen Fasergemische aber immer Fasern unterschiedlicher Längen, so daß diese Ideallänge durch Wahl eines Fasergemisches mit einer möglichst wenig abweichenden Häufigkeitsverteilung angenähert werden muß. Zu lange Fasern mit Längen beispielsweise oberhalb von 70 mm ergeben offensichtlich keinen zusätzlichen Festigkeitsgewinn gegenüber einer Faserlänge von beispielsweise 30 bis 50 mm mehr, sondern wirken sich insoferne eher nachteilig aus, als durch die große Faserlänge die Faseranzahl bei gegebenen Faseranteil verringert wird. Außerdem treten bei extrem langen Fasern zunehmend verschärfte Mischprobleme auf. Andererseits zeigt sich in der bereits geschilderten Weise, daß Fasern einer kürzeren Länge als etwa 10 mm nicht mehr wesentlich zur Erhöhung der Biegefestigkeit und Verbesserung der Biegbarkeit beizutragen vermögen, da solche, makroskopisch gesehen, kurze Fasern offensichtlich über keine ausreichend großen Bereiche des Preßstoffes reichen, um die gewünschten Verankerungseffekte an Nachbarfasern einerseits und an den Aerogelteilchen andererseits zu erzielen. Zu kurze Fasern können daher zu leicht aus dem umgebenden Preßstoff gezogen werden und geben bei Zugbeanspruchung an der Biegeaußenseite durch Relativbewegung im Preßstoff nach.

Die gute Biegefestigkeit im Verein mit der guten Biegbarkeit erschließt dem erfindungsgemäßen Preßstoff eine große Vielzahl von Anwendungsmöglichkeiten, die derartigen Preßstoffen bislang verschlossen waren, da vergleichbare Biegefestigkeiten nur mit gehärtetem, sprödem Preßstoff erreicht wurden und vergleichbare Biegbarkeit, wenn überhaupt, nur mit Faseranteilen von 50 % und mehr bei gleichzeitiger Anwesenheit einer erheblichen Menge an insbesondere organischem Bindemittel, so daß sich Fasermatten mit nachteilig hoher Wärmeleitzahl und geringer Biegefestigkeit ergaben. Wenn gehärtete Preßstoffe dieser Art insbesondere in bezug auf die Sprödigkeit bei gleichzeitiger Härte etwa mit Gußeisen verglichen würden, so ergäbe sich beim erfindungsgemäßen Preßstoff eine Vergleichbarkeit mit den Eigenschaften von Stahl, während mit Bindemittel behandelte Fasermatten etwa mit dem Werkstoff Blei vergleichbar wären. Dabei ist die Wärmedämmfähigkeit eines erfindungsgemäßen Preßstoffes zumindest so gut wie diejenige eines gehärteten Preßstoffes mit geringem Faseranteil von beispielsweise 5 %, da der Bindemittelzusatz beim gehärteten Preßstoff einen mindestens ebenso großen Anstieg der Wärmeleitzahl bringt wie der erhöhte Faseranteil des erfindungsgemäßen Preßstoffes; gegenüber Fasermatten mit extrem hohem Faseranteil und Bindemittelzusatz ist die Wärmeleitzahl des erfindungsgemäßen Preßstoffes erheblich besser, da der Faseranteil deutlich geringer ist und überdies Bindemittel fehlt.

Der erfindungsgemäße Preßstoff läßt sich in Folienform mit Dicken zwischen beispielsweise 0,5 mm und 3 bis 5 mm pressen und besitzt in dieser Form ähnliche Eigenschaffen wie etwa Asbestpapier oder Asbestpappe, die insbesondere mit Bitumen imprägniert als Dachdeckungsmaterial breite Verwendung gefunden haben. Selbst dünne Folien mit einer Dicke von 0,5 bis 1 mm weisen im Hinblick auf die relativ hohe Biegefestigkeit dabei noch eine Formstabilität auf, welche ihre Handhabbarkeit und Verarbeitbarkeit erleichtert. Dennoch sind solche Folien sehr gut biegbar und lassen sich daher auch stark gekrümmten Oberflächen bei einer Verlegung gut anpassen. In Fig. 4 ist eine solche Folie 5 mit einer Dicke d von beispielsweise 1 mm veranschaulicht, die in ihrem mittleren Bereich eine eingeprägte Vertiefung 6 aufweist.

Gemäß Fig. 5 ist eine Folie beispielsweise der in Fig. 4 veranschaulichten Art sandwichartig als Dämmschicht 7 zwischen zwei Blechen 8 und 9 beispielsweise aus Aluminium eingeklebt. Im Falle der Anbringung einer entsprechenden, etwa tiefgezogenen Vertiefung an den Blechen 8 und 9 kann unmittelbar auch eine Folie 5 mit einer Vertiefung 6 der aus Fig. 4 ersichtlichen Art als Dämmschicht 7 eingesetzt werden, wobei das Verbund-Wärmedämmelement gemäß Fig. 5 dann insgesamt eine entsprechende Vertiefung 6 besitzen würde. Der sandwichartige Aufbau des Wärmedämmelementes gemäß Fig. 5 ist aus dem dortigen vergrößerten Ausschnitt voll ersichtlich, in dem auch Klebeschichten 10 und 11 zu beiden Seiten der Dämmschicht 7 und zu deren Befestigung an den Blechen 8 und 9 veranschaulicht sind. Anstelle der vergleichsweise starken Bleche 8 und 9 können an einer oder beiden Seiten der Dämmschicht 7 auch entsprechend dünnere Metallfolien befestigt sein. In jedem Falle geben die Folien oder Bleche 8 und 9 im Verein mit den Klebstoffschichten 10 und 11 den Oberflächen der Dämmschicht 7 zusätzlichen Halt, so daß die Verformbarkeit eines solchen Sandwich-Wärmedämmelementes gegenüber derjenigen einer blanken Folie 5 gemäß Fig. 4 noch weiter erheblich verbessert werden kann.

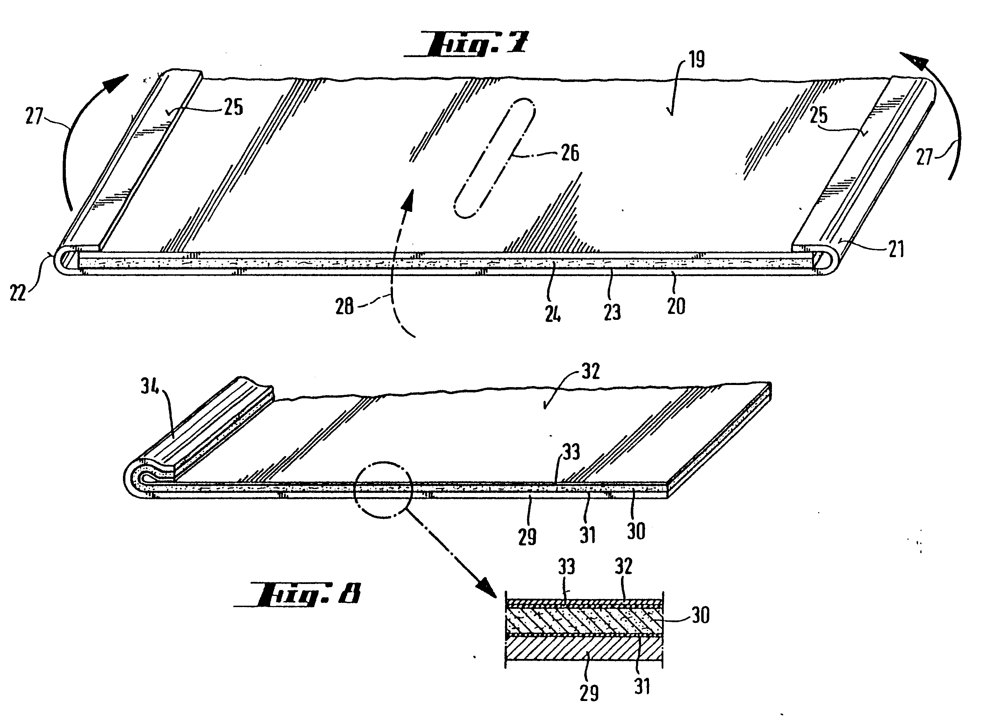

Gemäß Fig. 6 ist eine vergleichsweise dicke Dämmschicht 12 aus dem erfindungsgemäßen Preßstoff mittels einer Klebstoffschicht 13 an einem vergleichsweise starken, haltenden Blech 14 befestigt. Ein solcher Verbundkörper läßt sich insbesondere in Richtung der Pfeile 15 gemäß Fig. 6, also derart, daß das haltende Blech 14 an der Biegeaußenseite liegt, gut etwa zur Bildung eines Rohres mit innerer Auskleidung durch die Dämmschicht 12 verformen, da dann die Dämmschicht 12 aus dem erfindungsgemäßen Preßstoff bevorzugt auf Druck beansprucht wird und mit ihrer noch zugbelasteten Biegeaußenseite durch die Klebstoffschicht 13 stabilisiert ist. Die freie Seite der Dämmschicht 12 kann zusätzlich durch eine Bahn 16 abgedeckt werden, die an der Dämmschicht 12 jedoch nicht befestigt ist, sondern an ihrer Oberseite gleiten kann. Hierzu ist die Bahn 16 mit dem Blech 14 an nur einem Rand 17 in geeigneter Weise, im Beispielsfalle durch Niete 18, verbunden. Die Bahn 16 kann etwa bei Bildung eines Rohres aus dem Verbundkörper gemäß Fig. 6 als innere Abdeckschicht für die Dämmschicht 12 dienen.

Anstelle einer einseitigen Befestigung an einem Rand 17 kann bei einer Ausführungsform gemäß Fig. 7 auch eine Relativbeweglichkeit einer entsprechenden Abdeckbahn 19 bei gleichzeitiger Lagesicherung am Verbundkörper dadurch gesichert werden, daß die Bahn 19 gegenüber einem haltenden Stützblech 20 an beiden Rändern 21 und 22 des Verbundelementes verschieblich gehalten ist. Infolge des Fehlens einer Klebeschicht ist die Bahn 19 auch gegenüber der mit einer Klebeschicht 23 am Blech 20 festgelegten Dämmschicht 24 gleitbeweglich. An den Rändern 21 und 22 übergreift das haltende Blech 20 die Dämmschicht 24 und die Bahn 19 mit einem umgebogenen Haltestreifen 25, der die Außenfläche der Bahn 19 überdeckt und diese so hält, während in der veranschaulichten Weise zwischen den Rändern 21 und 22 eine seitliche Relativbewegung der Bahn 19 möglich ist. Gegebenenfalls kann die Bahn 19 mittels eines etwa mittig angeordneten Klebebereiches 26, der in Fig. 7 strichpunktiert angedeutet ist, gegenüber der Dämmschicht 24 im wesentlichen in einer zur Biegeachse parallelen Linie festgelegt werden, während die seitlichen Ränder der Bahn 19 im Bereich der Ränder 21 und 22 des Verbundelementes bei einer Biegung gemäß den in Fig. 7 eingezeichneten Pfeilen 27 relativbeweglich sind. In Richtung der Pfeile 27 kann das Verbundelement gemäß Fig. 7 beispielsweise ebenfalls zu einer Rohrform gebogen werden. Jedoch besteht auch die Möglichkeit einer Biegung gemäß Pfeil 28 um eine quer oder senkrecht zu den Rändern 21 und 22 liegende Biegeachse, gegebenenfalls ebenfalls zur Rohrform, wobei dann die Ränder 21 und 22 nicht im Nahtbereich des Rohres, sondern an den Stirnseiten des Rohres zu liegen kämen ; in einem solchen Falle müßte die Längserstreckung eines etwaigen Klebebereiches 26 quer zur gezeichneten Darstellung, also wiederum im wesentlichen parallel zur neuen Biegeachse, liegen.

In Fig. 8 ist ein Wärmedämmelement veranschaulicht, welches aus einem tragenden Blech 29 einer Stärke von beispielsweise 0,5 mm, einer Dämmschicht 30 einer Stärke von beispielsweise 2 mm und einer dazwischen angeordneten Klebeschicht 31 besteht, wobei die freie Oberfläche der Dämmschicht 30 durch eine dünne Folie 32 beispielsweise aus Aluminium abgedeckt ist, die über eine Klebeschicht 33 an der Dämmschicht 30 befestigt ist. Dieser Aufbau geht aus der vergrößert dargestellten Ausschnittsdarstellung hervor. Wie Fig. 8 veranschaulicht, kann das tragende Blech 29 mit der daran angeklebten und mit der Folie 32 kaschierten Dämmschicht 30 um 180° umgebogen werden, um einen umgebördelten Rand 34 zu erhalten, ohne daß die mechanische Integrität des Preßstoffes der Dämmschicht 30 zerstört wird.

Es liegt auf der Hand, daß Folien der aus Fig. 4 ersichtlichen Art und kaschierte Wärmedämmelemente der aus den Fig. 5 bis 8 ersichtlichen Art vielfache praktische Verwendungsmöglichkeiten besitzen. Der erfindungsgemäße Preßstoff besitzt auch bei höheren Temperaturen selbst bei sehr geringen Dämmdicken eine überragende Wärmedämmfähigkeit, die durch andere Wärmedämm-Materialien nur bei vielfach größerer Dämmdicke erzielbar wäre. Die Fähigkeit eines derartigen Preßstoffes, auf engstem Raum eine hochwirksame Wärmedämmung zu bilden, kommt durch die erfindungsgemäß erzielte Biegefestigkeit im Verein mit der Biegbarkeit voll zur Geltung, da gerade die Biegbarkeit es ermöglicht, den Preßstoff in Form einer Folie oder eines kaschierten Wärmedämmelementes mit der jeweils gewünschten Formgebung zur Verfügung zu stellen und ausreichend widerstandsfähig gegen Erschütterungen usw. zu machen. Dadurch erschließt sich eine Vielzahl von neuen Anwendungsmöglichkeiten insbesondere auftechnologisch anspruchsvollen Gebieten, wie etwa dem Kraftwerks-, Flugzeug-, Raketen- oder Satellitenbau. Jedoch auch auf technologisch weniger anspruchsvollen Gebieten treten häufig Proble :stellungen auf, die unter ungünstigen Einbauverhältnissen eine hochwirksame Wärmedämmung mit geringstmöglicher Dämmdicke erfordern und die mit dem erfindungsgemäßen Preßstoffgelöst werden können, beispielsweise im Rahmen der Konstruktion eines Abgaschalldämpfers oder in vergleichbaren Einsatzfällen. Der Kleber für die Klebstoffschichten 10, 11, 13, 23, 31 oder 33 kann dabei je nach der zu erwartenden Hitzebelastung des Wärmedämmelementes gewählt werden, wobei sich eine ausreichende Temperaturbeständigkeit des Klebers in jedem Falle durch Verwendung eines anorganischen Klebers erzielen läßt, beispielsweise auf der Basis von Aluminiumsilicat oder Wasserglas.

**Patentansprüche**

1. Wärmedämmender Preßstoff auf der Basis von aus der Flammenhydrolyse gewonnenem mikroporösem Oxidaerogel mit biegeelastischen oder biegeschlaffen, vorzugsweise anorganischen Fasern und gegebenenfalls weiteren Zuschlagstoffen, wie insbesondere Trübungsmitteln, gekennzeichnet durch die Kombination folgender Merkmale :
   a) Die Häufigkeitsverteilung der Faserlänge weist ein Maximum zwischen 10 mm und 70 mm auf ;
   b) der Preßstoff ist bis auf ein Raumgewicht von über 200 kg/m³, vorzugsweise über 250 kg/m³, verdichtet ;
   c) die Summe der Gewichtsanteile der Fasern und der Zuschlagstoffe, die jedoch kein Bindemittel enthalten, liegt zwischen 12 % und 60 % des Preßstoffes ; und
   d) der Gewichtsanteil der Fasern mit einer spezifischen Dichte des Fasermaterials von 2,55 g/cm³, soweit die Fasern eine größere Länge als 10 mm besitzen, liegt zwischen 12 % und 30 % des Preßstoffes, wobei im Falle von Fasermaterial mit einer von 2,55 g/cm³ abweichenden Dichte die Gewichtsanteile mit einem Faktor abzuwandeln sind, der dem Verhältnis der abweichenden Dichte zu 2,55 entspricht.
2. Preßstoff nach Anspruch 1, dadurch gekennzeichnet, daß der Gewichtsanteil der Fasern mit einer größeren Länge als 10 mm zwischen 12 und 25 %, vorzugsweise zwischen 12 und 22 % liegt.
3. Preßstoff nach Anspruch 2, dadurch gekennzeichnet, daß der Gewichtsanteil der Fasern mit einer · größeren Länge als 10 mm zwischen 12 und 20 % bevorzugt zwischen 14 und 20 % insbesondere bei 15 bis 18 % liegt.
4. Preßstoff nach einem der Ansprüche 1 bis 3, dadurch gekennzeichnet, daß die Dicke der Fasern unter 10 μm, bevorzugt unter 5 μm, insbesondere bei 1 bis 3 μm, liegt.
5. Preßstoff nach einem der Ansprüche 1 bis 4, dadurch gekennzeichnet, daß die Häufigkeitsverteilung der Faserlänge ein Maximum zwischen 20 mm und 70 mm bevorzugt zwischen 30 mm und 50 mm, aufweist.
6. Preßstoff nach einem der Ansprüche 1 bis 5, dadurch gekennzeichnet, daß das Raumgewicht des Preßstoffes zwischen 300 kg/m³ und 400 kg/m³, bevorzugt bei etwa 350 kg/m³, liegt.
7. Preßstoff nach einem der Ansprüche 1 bis 6, dadurch gekennzeichnet, daß die anorganischen Fasern Mineralfasern, insbesondere Aluminiumsilicatfasern, Aluminiumoxidfasern oder Quarzfasern, oder Mischungen hiervon sind.
8. Preßstoff nach einem der Ansprüche 1 bis 6, dadurch gekennzeichnet, daß die anorganischen Fasern metallische Fasern, insbesondere Edelstahlfasern, sind.
9. Preßstoff nach einem der Ansprüche 1 bis 8, dadurch gekennzeichnet, daß das Oxidaerogel ein Kieselsäure-Aerogel oder ein Aluminium-Aerogel oder eine Mischung hiervon ist.
10. Verfahren zur Herstellung eines Preßstoffes nach einem der Ansprüche 1 bis 9, bei dem die Bestandteile gemischt und gepreßt werden, dadurch gekennzeichnet, daß die Fasern als letzter Bestandteil zumindest gruppenweise vereinzelt zugemischt werden.
11. Verfahren nach Anspruch 10, dadurch gekennzeichnet, daß im Falle einer Verwendung von Zuschlagstoffen zunächst ein Vorgemisch von Aerogel und Zuschlagstoffen erzeugt wird, in dem die Zuschlagstoffe in einer wenigstens annähernd der Verteilung im Preßstoff entsprechenden homogenen Verteilung vorliegen.
12. Wärmedämmende, biegsame Folie mit einer Dicke bis unter 1 mm aus einem Preßstoff nach einem der Ansprüche 1 bis 9.
13. Kaschiertes·Wärmedämmelement mit wenigstens einer Kaschierungsbahn, wie einer Folie oder einem Blech, und einer zumindest einseitig daran befestigten Dämmschicht, dadurch gekennzeichnet, daß die Dämmschicht (7 bzw. 12 bzw. 24 bzw. 30) aus einem Preßstoff nach einem der Ansprüche 1 bis 9 besteht.
14. Wärmedämmelement nach Anspruch 13, dadurch gekennzeichnet, daß die Kaschierungsbahn als Metallfolie (32) oder Metallblech (8, 9 bzw. 14 bzw. 20 bzw. 29) ausgebildet ist, an die Dämmschicht

(7 bzw. 12 bzw. 24 bzw. 30) bleibend befestigt ist.

15. Wärmedämmelement nach Anspruch 14, dadurch gekennzeichnet, daß die bleibende Befestigung mittels einer Klebstoffschicht (10, 11 bzw. 13 bzw. 23 bzw. 31, 33) erfolgt.

16. Wärmedämmelement nach einem der Ansprüche 13 bis 15, dadurch gekennzeichnet, daß die Dämmschicht (7 bzw. 12 bzw. 24 bzw. 30) beidseitig von einer Kaschierungsbahn (Bleche 8, 9 ; Blech 14 ; Blech 20 ; Blech 29 ; Metallfolie 32) oder einer Abdeckbahn (Bahn 16 bzw. Bahn 19) abgedeckt ist.

17. Wärmedämmelement nach Anspruch 16, dadurch gekennzeichnet, daß eine Abdeckbahn (Bahn 16 bzw. Bahn 19) gegenüber der Dämmschicht (12 bzw. 24) gleitbeweglich gelagert und mit einer an der Dämmschicht (12 bzw. 24) bleibend befestigten Kaschierungsbahn (Blech 14 bzw. Blech 20) höchstens an einem Rand (17) unbeweglich verbunden ist.

18. Wärmedämmelement nach einem der Ansprüche 13 bis 17, dadurch gekennzeichnet, daß zumindest die an der Außenseite von Krümmungen nachträglich vorgenommener Biegungen (Pfeile 15 bzw. 27 bzw. 28) liegende Bahn (Bleche 8, 9 bzw. Blech 14 bzw. Blech 20 bzw. Blech 29) an der Dämmschicht (7 bzw. 12 bzw. 24 bzw. 30) befestigt ist.

19. Wärmedämmelement nach Anspruch 18, dadurch gekennzeichnet, daß die an der Außenseite von Krümmungen bei nachträglichen Biegungen (Pfeile 15 bzw. 27 bzw. 28) liegende Kaschierungsbahn (Blech 14 bzw. Blech 20 bzw. Blech 29) gegenüber einer an der Innenseite der Dämmschicht (12 bzw. 24 bzw. 30) liegenden Kaschierungsbahn (Metallfolie 33) oder Abdeckbahn (Bahn 16 bzw. Bahn 19) das größere Widerstandsmoment gegen Biegung besitzt.

20. Wärmedämmende Folie bzw. Wärmedämmelement nach einem der Ansprüche 12 bis 19, gekennzeichnet durch eine Ausbildung als geprägtes Formteil.

## Claims

1. Heat insulating moulded material based on microporous oxidaerogel obtained by flame hydrolysis with fibres, preferably inorganic fibres, which are elastic or slack under conditions of bending, and optionally other additives such as, in particular, clouding agents, characterised by the combination of the following features :

a) The frequency distribution of the fibre lengths has a maximum between 10 mm and 70 mm ;

b) The moulded material is compressed to a unit weight of over 200 kg/m$^3$, preferably over 250 kg/m$^3$;

c) the sum of proportions by weight of the fibres and of the additives which, however, contain no binder, amounts to 12 %-60 % of the moulded material ; and

d) the proportion by weight of the fibres having a specific density of the fibre material of 2.55 g/cm$^3$, provided the fibres are longer than 10 mm, amounts to from 12 % to 30 % of the moulded material, and in the case of fibre material having a density deviating from 2.55 g/cm$^3$, the proportions by weight are to be modified by a factor corresponding to the ratio of the deviating density to 2.55.

2. Moulded material according to claim 1, characterised in that the proportion by weight of the fibres having a greater length than 10 mm is from 12 % to 25 %, preferably from 12 % to 22 %.

3. Moulded material according to claim 2, characterised in that the proportion by weight of the fibres having a greater length than 10 mm is from 12 % to 20 %, preferably from 14 % to 20 %, in particular from 15 % to 18 %.

4. Moulded material according to one of the claims 1 to 3, characterised in that the thickness of the fibres is below 10 μm, preferably below 5 μm, in particular from 1 to 3 μm.

5. Moulded material according to one of the claims 1 to 4, characterised in that the frequency distribution of the fibre length has a maximum in the range of from 20 mm to 70 mm, preferably from 30 mm to 50 mm.

6. Moulded material according to one of the claims 1 to 5, characterised in that the unit weight of the moulded material is in the region of from 300 kg/m$^3$ to 400 kg/m$^3$, and is preferably about 350 kg/m$^3$.

7. Moulded material according to one of the claims 1 to 6, characterised in that the inorganic fibres are mineral fibres, in particular aluminium silicate fibres, aluminium oxide fibres or quartz fibres or mixtures thereof.

8. Moulded material according to one of the claims 1 to 6, characterised in that the inorganic fibres are metallic fibres, in particular refined steel fibres.

9. Moulded material according to one of the claims 1 to 8, characterised in that the oxidaerogel is a silica aerogel or an aluminium aerogel or a mixture thereof.

10. Process for the production of a moulded material according to one of the claims 1 to 9, in which the components are mixed and pressed, characterised in that the fibres are added as last component, separated out, at least groupwise.

11. Process according to claim 10, characterised in that when additives are used, a premix of aerogel and additives is first prepared, in which the additives have at least approximately the same homogeneous distribution as in the moulded material.

12. Heat insulating, flexible foil having a thickness below 1 mm consisting of a moulding material according to one of the claims 1 to 9.

13. Laminated heat insulating element comprising at least one laminating layer such as a foil or metal sheet and an insulating layer attached thereto at least on one side, characterised in that the insulating layer (7, 12, 24 or 30) consists of a moulded material according to one of the claims 1 to 9.

14. Heat insulating element according to claim 13, characterised in that the laminating layer is in the form of a metal foil (32) or metal sheet (8,9 or 14 or 20 or 29) to which the insulating layer (7 or 12 or 24 or 30) is permanently attached.

15. Heat insulating layer according to claim 14, characterised in that the permanent attachment is obtained by means of a layer of adhesive (10, 11 or 13 or 23 or 31, 33).

16. Heat insulating element according to one of the claims 13 to 15, characterised in that the insulating layer (7 or 12 or 24 or 30) is covered on both sides by a laminating layer (metal sheets 8, 9 ; metal sheet 14 ; metal sheet 20 ; metal sheet 29 ; metal foil 32) or by a covering layer (layer 16 or layer 19).

17. Heat insulating element according to claim 16, characterised in that a covering layer (layer 16 or layer 19) is mounted to be slidably displaceable relatively to the insulating layer (12 or 24) and is attached immovably at the most at one edge (17) to a laminating sheet (metal sheet 14 or metal sheet 20) which is permanently fixed to the insulating layer (12 or 24).

18. Heat insulating element according to one of the claims 13 to 17, characterised in that at least that layer (metal sheet 8,9 or metal sheet 14 or 20 or 29) situated on the outside of curvatures formed by subsequent bending (arrows 15 or 27 or 28) is attached to the insulating layer (7 or 12 or 24 or 30).

19. Heat insulating element according to claim 18, characterised in that the laminating sheet (metal sheet 14 or 20 or 29) lying on the outside of curvatures formed by subsequent bending (arrow 15 or 27 or 28) has a greater resistance to bending than a laminating sheet (metal foil 33) or covering sheet (layer 16 or layer 19) situated on the internal surface of the insulating layer (12 or 24 or 30).

20. Heat insulating foil or heat insulating element according to one of the claims 12 to 19, characterised by its formation as an embossed moulding.

## Revendications

1. Matière comprimée isolante thermique à base d'un aérogel d'oxyde microporeux obtenu par hydrolyse à la flamme et, avec des fibres élastiques à la flexion ou molles à la flexion, de préférence inorganiques, et éventuellement d'autres substances additives comme en particulier des opacifiants, caractérisée par la combinaison des caractéristiques suivantes :

a) la répartition de population de la longueur des fibres possède un maximum entre 10 mm et 70 mm ;

b) la matière comprimée est comprimée à un poids volumique de plus de 200 kg/m³, de préférence de plus de 250 kg/m³ ;

c) la somme des proportions en poids des fibres et des substances additives mais qui ne contiennent pas de liant est comprise entre 12 et 60 % de la matière comprimée ; et

d) la proportion en poids des fibres, dans le cas d'une densité de la matière fibreuse de 2,55 g/cm³, pourvu que les fibres possèdent une longueur supérieure à 10 mm, est comprise entre 12 % et 30 % de la matière comprimée, cependant que, dans le cas d'une matière fibreuse possédant une densité différente de 2,55 g/cm³, les proportions en poids doivent être corrigées par un facteur qui correspond au rapport entre la densité différente et 2,55.

2. Matière comprimée selon la revendication 1, caractérisée en ce que la proportion en poids des fibres d'une longueur supérieure à 10 mm est située entre 10 et 25 % de préférence entre 10 et 22 %.

3. Matière comprimée selon la revendication 2, caractérisée en ce que la proportion en poids des fibres d'une longueur supérieure à 10 mm est située entre 12 et 20 %, de préférence entre 14 et 20 %, en particulier au niveau de 15 à 18 %.

4. Matière comprimée selon une des revendications 1 à 3, caractérisée en ce que l'épaisseur des fibres est inférieure à 10 μm, de préférence inférieure à 5 μm, en particulier égale à 1 à 3 μm.

5. Matière comprimée selon une des revendications 1 à 4, caractérisée en ce que la répartition de population des longueurs de fibres présente un maximum entre 20 mm et 70 mm, de préférence entre 30 mm et 50 mm.

6. Matière comprimée selon une des revendications 1 à 5, caractérisée en ce que le poids volumique de la matière comprimée est situé entre 300 kg/m³ et 400 kg/m³, de préférence au niveau d'environ 350 kg/m³.

7. Matière comprimée selon une des revendications 1 à 6, caractérisée en ce que les fibres inorganiques sont des fibres minérales, en particulier des fibres de silicate d'aluminium, des fibres d'oxyde d'aluminium ou des fibres de quartz, ou des mélanges de ces fibres.

8. Matière comprimée selon une des revendications 1 à 6, caractérisée en ce que les fibres inorganiques sont des fibres métalliques, en particulier des fibres d'acier inoxydable.

9. Matière comprimée selon une des revendications 1 à 8, caractérisée en ce que l'aérogel d'oxyde est un aérogel de silice ou un aérogel d'aluminium ou un mélange de ces aérogels.

10. Procédé de fabrication d'une matière comprimée selon une des revendications 1 à 9, dans lequel on mélange et comprime les constituants, caractérisé en ce que les fibres sont ajoutées en mélange en qualité de dernier constituant, du moins divisées en groupes.

11. Procédé selon la revendication 10, caractérisé en ce que, dans le cas de l'utilisation de substances additives, on produit tout d'abord un prémélange d'aérogel et de substances additives dans lequel les substances additives se présentent dans une répartition homogène qui correspond au moins approximativement à leur répartition dans la matière comprimée.

12. Feuille isolante thermique flexible, d'une épaisseur de moins de 1 mm, faite d'une matière comprimée selon une des revendications 1 à 9.

13. Elément isolant thermique stratifié comprenant au moins une feuille de doublage telle qu'une feuille ou une tôle et une couche isolante fixée à cette feuille, au moins sur une face, caractérisé en ce que la couche isolante (7 ou 12 ou 24 ou 30 respectivement) est composée d'une matière comprimée selon l'une des revendications 1 à 9.

14. Elément isolant thermique selon la revendication 13, caractérisé en ce que la feuille de doublage est constituée par une feuille métallique (32) ou une tôle métallique (8, 9, ou 14 ou 20 ou 29 respectivement), à laquelle la couche isolante (7, 12, 24 ou 30 respectivement) est fixée de façon permanente.

15. Elément isolant thermique selon la revendication 14, caractérisé en ce que la fixation permanente est assurée au moyen d'une couche de colle (10, 11 ou 13 ou 23 ou 31, 33 respectivement).

16. Elément isolant thermique selon une des revendications 13 à 15, caractérisé en ce que la couche isolante (7 ou 12 ou 24 ou 30 respectivement) est recouverte sur les deux faces par une feuille de doublage (tôles 8, 9 ; tôle 14 ; tôle 20 ; tôle 29 ; feuille métallique 32) ou par une feuille de revêtement (feuille 16 ou feuille 19 respectivement).

17. Elément isolant thermique selon la revendication 16, caractérisé en ce qu'une feuille de revêtement (feuille 16 ou feuille 19 respectivement) est montée avec possibilité de glissement par rapport à la couche isolante (12 ou 24 respectivement) et est fixée sans possibilité de déplacement, au maximum le long d'un bord (17) à une feuille de doublage (tôle 14 ou tôle 20 respectivement) fixée de façon permanente à la couche de doublage (12 ou 24 respectivement).

18. Elément isolant thermique selon une des revendications 13 à 17, caractérisé en ce qu'au moins la feuille (tôles 8, 9 ou tôle 14 ou tôle 20 ou tôle 29 respectivement) qui se trouve sur le côté extérieur de la courbure des flexions exécutées ultérieurement (flèches 15 ou 27 ou 28 respectivement) est fixée à la couche isolante (7 ou 12 ou 24 ou 30 respectivement).

19. Elément isolant thermique selon la revendication 18, caractérisé en ce que la feuille de doublage (tôle 14 ou tôle 20 ou tôle 29) qui se trouve sur le côté extérieur de la courbure lors des flexions exécutées ultérieurement (flèches 15 ou 27 ou 28 respectivement) possède le plus grand moment résistant à la flexion, comparativement à une feuille de doublage (feuille métallique 33) ou feuille de revêtement (feuille 16 ou feuille 19 respectivement) qui se trouve sur la face intérieure de la couche isolante (12 ou 14 ou 30 respectivement).

20. Feuille isolante thermique ou élément isolant thermique selon une des revendications 12 à 19, caractérisé en ce qu'elle ou il est constitué(e) par une pièce de forme emboutie.

15

*Fig. 1*

MITTLERE WÄRMELEITZAHL $\lambda$ [W/mK]

RAUMGEWICHT [kg/m³]

30% Faseranteil
20% Faseranteil
11% Faseranteil
5,5% Faseranteil

0,026
0,025
0,024
0,023
0,022
0,021
0,020
0,019
0,018

220  240  260  280  300  320  340  360  380  400  420  440

1  2  3  4

0 059 860

## Fig. 2

Fig. 2: Diagram — BIEGEFESTIGKEIT [N/cm²] vs LANGFASERANTEIL [Gew. %]
Kurven: RG=380 kg/m³, RG=350 kg/m³, RG=320 kg/m³
Punkte: (5,5) (11) (15) (18) (22) (25) (30) (35,5)

## Fig. 3

Fig. 3: Diagram — BIEGEWECHSELZAHL vs LANGFASERANTEIL [Gew. %]
RG=380 kg/m³, d=3 mm, R 60 mm
Punkte: (5,5) (11) (15) (18) (22) (25) (30) (35,5)

2

0 059 860

**Fig. 4**

5

6

d

**Fig. 5**

11

10   8   7

9

9   11

7

8   10

**Fig. 6**

16

18

17

15

18

15

14   13   12

3

_Fig. 7_

_Fig. 8_

0 059 860